# EUROPÄISCHE PATENTANMELDUNG

(11) **EP 1 886 560 A1**
(43) Veröffentlichungstag der Anmeldung: **13.02.2008**
(21) Anmeldenummer: 06016397.9
(22) Anmeldetag: 05.08.2006
(51) Int. Cl.: A01N 25/02, A01N 25/04, A01N 47/22, A01N 43/76, A01N 43/707, A01N 43/12, A01N 37/48, A01N 37/38, A01P 13/00

(54) **Neue mikroemulgierbare Konzentrate**

(71) Anmelder: Bayer CropScience AG, 40789 Monheim (DE)
(72) Erfinder: Maier, Thomas, 65719 Hofheim (DE); Haase, Detlev, 65929 Frankfurt am Main (DE); Schnabel, Gerhard, 63820 Elsenfeld (DE); Frisch, Gerhard, 61273 Werheim (DE); Merk, Dorel-Gheorghe, 61440 Oberursel (DE); Schweinitzer, Gerd, 65934 Frankfurt am Main (DE); Grohs, Ralph, 40219 Düsseldorf (DE)

(57) **Zusammenfassung**

Die vorliegende Erfindung betrifft ein Mikroemulsionskonzentrat, enthaltend
a) ein oder mehrere agrochemische Wirkstoffe, insbesondere aus der Gruppe der Fungizide, Insektizide, Pflanzenwachstumsregulatoren, Herbizide und Safener,
b) ein oder mehrere alkoholische Lösungsmittel mit mindestens 5 C-Atomen,
c) ein oder mehrere nicht-alkoholische Lösungsmittel,
d) ein oder mehrere anionische Tenside, und
e) ein oder mehrere nichtionische Tenside.

Das Mikroemulsionskonzentrat eignet sich im Bereich des Pflanzenschutzes.

## Beschreibung

Die vorliegende Erfindung betrifft das Gebiet der Pflanzenschutzmittelformulierungen. Insbesondere betrifft die Erfindung flüssige agrochemische Formulierungen in Form von Mikroemulsionskonzentraten und Mikroemulsionen.

Wirkstoffe für den Pflanzenschutz werden im allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als feste oder flüssige Wirkstoffformulierung eingesetzt. Aber auch die Wirkstoffformulierung von Kombinationen (Mischungen) mit weiteren Wirkstoffen zur Erweiterung des Wirkungsspektrums und/oder zum Schutz der Kulturpflanzen, wie mit Safenern (Antidote), ist ein wichtiges Arbeitsgebiet der Formulierungstechnologie, da hier Wirkstoffe mit zum Teil recht unterschiedlichen physikalischen, chemischen und biologischen Parametern adäquat gemeinsam formuliert werden müssen.

So sollten Formulierungen von Kombinationen mehrerer Wirkstoffe, für den Pflanzenschutz im allgemeinen eine hohe chemische und physikalische Stabilität, eine gute Applizierbarkeit und Anwenderfreundlichkeit und eine breite biologische Wirkung mit hoher Selektivität im Hinblick auf die verwendeten Wirkstoffe aufweisen, neben einer technisch guten Formulierbarkeit im Herstellungsprozess.

Flüssige Formulierungen sind z.B. beschrieben in EP 0 261 492, EP 0 394 847, WO 95/17822, WO 98/31223, WO 89/03176, EP 0 357 149, WO 02/45507, GB 2 267 825 A, WO 94/23578, EP 0 330 904, EP 0 533 057, EP 0 533 057, DE 36 24 910, WO 01/74785, EP 0 400 585, EP 0 118 579, XP 002 177 928, EP 0 648 414 A1, US 5 300 529, US 0 533 057, EP 0 330 904 A1, DE 2 328 192 A1, EP 0 432 062 A1, EP 0 297 207 A1, DE 81 162 B1, EP 0 244 754 A1, WO 99/45780, WO 99/40784, WO 87/04047, DE 3 618 535 A1, WO 04/054360 und WO 98/16102.

In EP 0 257 286 A1 wird die Herstellung einer Mikroemulsion (ME) für das Insektizid Endosulfan beschrieben, welche ein Lösungsmittelgemisch verwendet in dem Isobutanol, ein C₄-Alkohol, enthalten ist.

Die Aufgabe der vorliegenden Erfindung bestand darin, eine verbesserte Pflanzenschutzmittelformulierung zur Verfügung zu stellen, die auch im Hinblick auf die verwendeten Wirkstoffe und/oder Kombinationen daraus vorteilhaft ist, wie z.B. eine verbesserte Wirksamkeit aufweist.

Überraschenderweise wurde nun gefunden, dass diese Aufgabe durch das spezielle Mikroemulsionskonzentrat (MC) der vorliegenden Erfindung gelöst wird.

Die vorliegende Erfindung betrifft somit ein Mikroemulsionskonzentrat, enthaltend
(a) ein oder mehrere agrochemische Wirkstoffe, insbesondere aus der Gruppe der Fungizide, Insektizide, Pflanzenwachstumsregulatoren, Herbizide und Safener,
(b) ein oder mehrere alkoholische Lösungsmittel mit mindestens 5 C-Atomen,
(c) ein oder mehrere nicht-alkoholische Lösungsmittel,
(d) ein oder mehrere anionische Tenside, und
(e) ein oder mehrere nichtionische Tenside.

Darüber hinaus kann das erfindungsgemäße Mikroemulsionskonzentrat als weitere Komponenten gegebenenfalls noch enthalten (f) übliche Hilfs- und Zusatzstoffe.

Unter dem Begriff Mikroemulsionskonzentrat (MC) wird eine Komposition verstanden, die bei Verdünnung mit Wasser Mikroemulsionen (ME) bildet, z.B. Öl-in-Wasser-Mikroemulsionen oder Wasser-in-Öl-Mikroemulsionen. Unter einer Mikroemulsion wird eine Emulsion verstanden, die thermodynamisch stabil ist und eine geringe Tröpfchengröße der emulgierten Phase aufweist, die im allgemeinen im Bereich von 10 - 400 nm, vorzugsweise 20 - 350 nm liegt.

Somit zeichnen sich Mikroemulsionskonzentrate u.a. dadurch aus, dass kein Wasser als Formulierungshilfsstoff benutzt wird. Dennoch können Verunreinigungen an Wasser über die einzelnen Komponenten eingeschleust werden. Dieser Wassergehalt bis maximal ≤ 2 Gew.-%, in der Regel 0 bis ≤ 1 Gew.-%, ist für die Qualität des Mikroemulsionskonzentrates jedoch unerheblich.

Die erfindungsgemäßen Mikroemulsionskonzentrate enthalten im allgemeinen folgende Mengen an Komponenten (a), (b), (c), (d), (e) und (f), dabei bezieht sich die Angabe "Gew.-%" hier und in der gesamten Beschreibung, wenn nicht anders definiert, auf das relative Gewicht der jeweiligen Komponente bezogen auf das Gesamtgewicht der Formulierung:
Komponente (a): 0,001 - 50 Gew.-%, bevorzugt 0,1 - 45 Gew.-%, besonders bevorzugt 1 - 40 Gew.-%.
Komponente (b): 1 - 60 Gew.-%, bevorzugt 2 - 50 Gew.-%, besonders bevorzugt 3 - 40 Gew.-%.
Komponente (c): 5 - 90 Gew.-%, bevorzugt 8 - 85 Gew.-%, besonders bevorzugt 12 - 70 Gew.-%.
Komponente (d): 0,1 - 30 Gew.-%, bevorzugt 0,5 - 25 Gew.-%, besonders bevorzugt 1 - 40 Gew.-%.
Komponente (e): 0,1 - 70 Gew.-%, bevorzugt 1 - 60 Gew.-%, besonders bevorzugt 2 - 50 Gew.-%.
Komponente (f): 0 - 40 Gew.-%, bevorzugt 0 - 35 Gew.-%, besonders bevorzugt 0 - 30 Gew.-%.

Als Wirkstoffe (Komponente a) im erfindungsgemäßen Mikroemulsionskonzentrat kommen sämtliche im agrochemischen Bereich einsetzbare Wirkstoffe in Betracht. Vorzugsweise genannt seien Fungizide, Bakterizide, Insektizide, Akarizide, Nematizide, Molluskizide, Rodentizide, Repellents, Pflanzenwuchsregulatoren, Herbizide und Safener sowie Pflanzennährstoffe. Im folgenden beinhaltet der Begriff Fungizide sowohl Fungizide wie auch Bakterizide und Virizide, der Begriff Insektizide sowohl Insektizide wie auch Akarizide, Nematizide, Molluskizide, Rodentizide und Repellents und der Begriff Herbizide sowohl Herbizide wie auch Pflanzenwuchsregulatoren - soweit aus dem Zusammenhang nichts anderes hervorgeht.

Die agrochemischen Wirkstoffe können Fungizide sein, beispielsweise
Inhibitoren der Nucleinsäure Synthese, insbesondere
   Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure;
Inhibitoren der Mitose und Zellteilung, insbesondere
   Benomyl, Carbendazim, Diethofencarb, Fuberidazole, Pencycuron, Thiabendazol, Thiophanat-methyl, Zoxamid;
Inhibitoren der Atmungskette Komplex I, insbesondere
   Diflumetorim;
Inhibitoren der Atmungskette Komplex II, insbesondere
   Boscalid, Carboxin, Fenfuram, Flutolanil, Furametpyr, Mepronil, Oxycarboxin, Penthiopyrad, Thifluzamid;
Inhibitoren der Atmungskette Komplex III, insbesondere
   Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin, Trifloxystrobin;
Entkoppler, insbesondere
   Dinocap, Fluazinam;
Inhibitoren der ATP Produktion, insbesondere
   Fentinacetat, Fentinchlorid, Fentinhydroxid, Silthiofam;
Inhibitoren der Aminosäure- und Proteinbiosynthese, insbesondere
   Andoprim, Blasticidin-S, Cyprodinil, Kasugamycin, Kasugamycinhydrochlorid Hydrat, Mepanipyrim, Pyrimethanil;
Inhibitoren der Signal-Transduktion, insbesondere
   Fenpiclonil, Fludioxonil, Quinoxyfen;
Inhibitoren der Fett- und Membran Synthese, insbesondere
   Chlozolinat, Iprodion, Procymidon, Vinclozolin,
   Ampropylfos, Kalium-Ampropylfos, Edifenphos, lprobenfos (IBP), Isoprothiolan, Pyrazophos,
   Tolclofos-methyl, Biphenyl,
   lodocarb, Propamocarb, Propamocarb hydrochlorid;
Inhibitoren der Ergosterol Biosynthese, insbesondere
   Fenhexamid,
   Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol, Aldimorph, Dodemorph, Dodemorphacetat, Fenpropimorph, Tridemorph, Fenpropidin, Spiroxamin,
   Naftifin, Pyributicarb, Terbinafin;
Inhibitoren der Zellwand Synthese, insbesondere
   Benthiavalicarb, Bialaphos, Dimethomorph, Flumorph, Iprovalicarb, Polyoxins, Polyoxorim, Validamycin A;
Inhibitoren der Melanin Biosynthese, insbesondere
   Capropamid, Diclocymet, Fenoxanil, Phtalid, Pyroquilon, Tricyclazol;
Resistenzinduktoren, insbesondere
   Acibenzolar-S-methyl, Probenazol, Tiadinil;
Multisite, insbesondere
   Captafol, Captan, Chlorothalonil, Kupfersalze wie: Kupferhydroxid, Kupfemaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram;
Fungizide mit unbekannten Mechanismus, insbesondere
   Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin -Natrium, Proquinazid, Pyrrolnitrin, Quintozen, Tecloftalam, Tecnazen, Triazoxid, Trichlamid, Zarilamid und 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1 H-inden-4-y1>3-pyridincarboxamid, 3-[5-(4-Chlorphenyl)-2,3-dimethylisoxazolidin-3-yl]pyridin, cis-1-(4-Chlorphenyl)-2-(1 H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1 H-inden-1-yl)-1H-imidazole-5-carboxylat, 3,4,5-Trichlor-2,6-pyridindicarbonitril, Methyl 2-[[[cyclopropyl[(4-methoxyphenyl) imino]methyl]thio]methyl]-.alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl]oxy]-3-methoxyphenyl]ethyl]- 3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1R)-1,2,2-trimethylpropyl][1,2,4]triazolo[1,5-a]pyrimidin-7-amin, 5-Chlor-N-[(1 R)-1,2-dimethylpropyl]-6-(2,4,6-trifluorophenyl) [1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlornicotinamid, 2-Butoxy-6-iod-3-propyl-benzopyranon-4-on, N-{(Z)-[(cyclopropylmethoxy)imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1Fluor-2-phenylethyl)oxy] phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1 H-pyrazol-4-carboxamid, N-(6-Methoxy-3-pyridinyl)-cyclopropan carboxamid, 1-[(4-Methoxyphenoxy)methyl]-2,2-dimethylpropyl-1 H-imidazol-1-carbonsäure, O-[1-[(4-Methoxyphenoxy)methyl]-2,2-dimethylpropyl]-1H-imidazol- 1- carbothioic acid, 2-(2-{[6-(3-Chlor-2-methylphenoxy)-5-fluorpyrimidin-4-yl]oxy}phenyl)-2-(methoxyimino)-N-methylacetamid.

Die agrochemischen Wirkstoffe können auch Bakterizide sein, beispielsweise Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Die vorstehend aufgeführten Fungizide (Bakterizide) sind z.B. bekannt aus "The Pesticide Manual", 12. Auflage (2000) und 13. Auflage (2003), The British Crop Protection Council oder den nach den einzelnen Wirkstoffen aufgeführten Literaturstellen.

Die agrochemischen Wirkstoffe können auch Insektizide / Akarizide und/oder Nematizide sein, beispielsweise
Acetylcholinesterase (AChE) Inhibitoren
   Carbamate,
   zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metamsodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate;
   Organophosphate,
   zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion;
Natrium-Kanal-Modulatoren / Spannungsabhängige Natrium-Kanal-Blocker
   Pyrethroide,
   zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1 R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1 R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1 R- isomer), Tralomethrin, Transfluthrin, ZXI 8901, Pyrethrins (pyrethrum);
   DDT;
   Oxadiazine,
   zum Beispiel Indoxacarb;
   Semicarbazon,
   zum Beispiel Metaflumizon (BAS3201);
Acetylcholin-Rezeptor-Agonisten/-Antagonisten
   Chloronicotinyle,
   zum Beispiel Acetamiprid, Clothianidin, Dinotefuran, Imidacloprid, Nitenpyram, Nithiazine, Thiacloprid, Thiamethoxam
   Nicotine, Bensultap, Cartap;
Acetylcholin-Rezeptor-Modulatoren
   Spinosyne,
   zum Beispiel Spinosad;
GABA-gesteuerte Chlorid-Kanal-Antagonisten
   Organochlorine,
   zum Beispiel Camphechlor, Chlordane, Endosulfan, Gamma-HCH, HCH, Heptachlor, Lindane, Methoxychlor;
   Fiprole,
   zum Beispiel Acetoprole, Ethiprole, Fipronil, Pyrafluprole, Pyriprole, Vaniliprole;
Chlorid-Kanal-Aktivatoren
   Mectine,
   zum Beispiel Abamectin, Emamectin, Emamectin-benzoate, Ivermectin, Lepimectin, Milbemycin;
Juvenilhormon-Mimetika,
   zum Beispiel Diofenolan, Epofenonane, Fenoxycarb, Hydroprene, Kinoprene, Methoprene, Pyriproxifen, Triprene;
Ecdysonagonisten/disruptoren
   Diacylhydrazine,
   zum Beispiel Chromafenozide, Halofenozide, Methoxyfenozide, Tebufenozide;
Inhibitoren der Chitinbiosynthese
   Benzoylharnstoffe,
   zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron;
   Buprofezin;
   Cyromazine;
Inhibitoren der oxidativen Phosphorylierung, ATP-Disruptoren
   Diafenthiuron,
   Organozinnverbindungen,
   zum Beispiel Azocyclotin, Cyhexatin, Fenbutatin-oxide;
Entkoppler der oxidativen Phoshorylierung durch Unterbrechung des H-Protongradienten
   Pyrrole,
   zum Beispiel Chlorfenapyr;
   Dinitrophenole,
   zum Beispiel Binapacyrl, Dinobuton, Dinocap, DNOC;
Site-I-Elektronentransportinhibitoren
   METI'S,
   zum Beispiel Fenazaquin, Fenpyroximate, Pyrimidifen, Pyridaben, Tebufenpyrad, Tolfenpyrad,
   Hydramethylnon,
   Dicofol;
Site-II-Elektronentransportinhibitoren
   Rotenone;
Site-III-Elektronentransportinhibitoren
   Acequinocyl, Fluacrypyrim;
Mikrobielle Disruptoren der Insektendarmmembran
   Bacillus thuringiensis-Stämme;
Inhibitoren der Fettsynthese
   Tetronsäuren,
   zum Beispiel Spirodiclofen, Spiromesifen
   Tetramsäuren,
   zum Beispiel Spirotetramat
   Carboxamide,
   zum Beispiel Flonicamid
   Oktopaminerge Agonisten,
   zum Beispiel Amitraz;
Inhibitoren der Magnesium-stimulierten ATPase,
   Propargite
   Nereistoxin-Analoge,
   zum Beispiel Thiocyclam hydrogen oxalate, Thiosultap-sodium;
Agonisten des Ryanodin-Rezeptors,
   Benzoesäuredicarboxamide,
   zum Beispiel Flubendiamid
   Anthranilamide,
   zum Beispiel DPX E2Y45 (3-bromo-N-{4-chloro-2-methyl-6-[(methylamino)carbonyl]phenyl}-1-(3-chloropyridin-2-yl)-1 H-pyrazole-5-carboxamide);
Biologika, Hormone oder Pheromone
   Azadirachtin, Bacillus spec., Beauveria spec., Codlemone, Metarrhizium spec., Paecilomyces spec., Thuringiensin, Verticillium spec.;
Wirkstoffe mit unbekannten oder nicht spezifischen Wirkmechanismen
   Fraßhemmer,
   zum Beispiel Cryolite, Flonicamid, Pymetrozine;
   Milbenwachstumsinhibitoren,
   zum Beispiel Clofentezine, Etoxazole, Hexythiazox;
   Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin.

Die vorstehend aufgeführten Insektizide (Akarizide, Nematizide) sind z.B. bekannt aus "The Pesticide Manual", 12. Auflage (2000) und 13. Auflage (2003), The British Crop Protection Council oder den nach den einzelnen Wirkstoffen aufgeführten Literaturstellen.

Die agrochemischen Wirkstoffe können auch Herbizide und/oder Pflanzenwachstumsregulatoren sein; beispielsweise ALS-Inhibitoren (Acetolactat-Synthetase-Inhibitoren) oder von ALS-Inhibitoren verschiedene Herbizide, wie Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxy-phenoxyalkancarbonsäure-Derivate, wie Chinolyloxy-, Chinoxalyl-oxy-, Pyridyloxy-, Benzoxazolyloxy- und Benzthiazolyloxyphenoxyalkancarbonsäureester, Cyclo-hexandionabkömmlinge, Phosphor-haltige Herbizide, z.B. vom Glufosinate-Typ oder vom Glyphosate-Typ, S-(N-Aryl-N-alkylcarbamoylmethyl)-dithiophosphorsäureester, Harnstoffe sowie Hydroxybenzonitrile.

Bei den ALS-Inhibitoren handelt es sich insbesondere um Imidazolinone, Pyrimidinyloxy-pyridincarbonsäure-Derivate, Pyrimidyloxy-benzoesäure-Derivate, Triazolo-pyrimidin-sulfonamid-Derivate und um Sulfonamide, vorzugsweise aus der Gruppe der Sulfonylharnstoffe.

Unter den in den erfindungsgemäßen Mikroemulsionskonzentraten als Komponente enthaltenen Wirkstoffen aus der Gruppe der ALS-Inhibitoren wie Sulfonylharnstoffe sind im Sinne der vorliegenden Erfindung neben den neutralen Verbindungen stets auch deren Salze mit anorganischen und/oder organischen Gegenionen zu verstehen. So können z.B. Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂S0₄ oder HNO₃.

Bevorzugte ALS-Inhibitoren entstammen aus der Reihe der Sulfonylharnstoffe, z.B. Pyrimidin- oder Triazinylaminocarbonyl-[benzol-, pyridin-, pyrazol-, thiophen- und (alkylsulfonyl)-alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulfonyl)-alkylamino-Teil sind Alkyl, Alkoxy, Halogen wie F, Cl, Br oder J, Amino, Alkylamino, Dialkylamino, Acylamino wie Formylamino, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, Alkylsulfonylaminoalkyl, (Alkansulfonyl)alkylamino. Solche geeigneten Sulfonylharnstoffe sind beispielsweise
A1) Phenyl- und Benzylsulfonylharnstoffe und verwandte Verbindungen, z.B.
   1-(2-Chlorphenylsulfonyl)-3-(4-methoxy-6-methyl-1,3,5-triazin-2-yl)harnstoff (Chlorsulfuron),
   1-(2-Ethoxycarbonylphenylsulfonyl)-3-(4-chlor-6-methoxypyrirnidin-2-yl)harnstoff (Chlorimuron-ethyl),
   1-(2-Methoxyphenylsulfonyl)-3-(4-methoxy-6-methyl-1,3,5-triazin-2-yl)harnstoff (Metsulfuron-methyl),
   1-(2-Chlorethoxyphenylsulfonyl)-3-(4-methoxy-6-methyl-1,3,5-triazin-2-yl)harnstoff (Triasulfuron),
   1-(2-Methoxycarbonylphenylsulfonyl)-3-(4,6-dimethylpyrimidin-2-yl)harnstoff (Sulfumeturon-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxypyrimidin-2-yl)harnstoff (Bensulfuron-methyl),
   1-(2-Methoxycarbonylphenylsulfonyl)-3-(4,6-bis-(difluormethoxy)pyrimidin-2-yl)-harnstoff, (Primisulfuron-methyl),
   3-(4-Ethyl-6-methoxy-1,3,5-triazin-2-yl)-1-(2,3-dihyd ro-1,1-dioxo-2-methylbenzo-[b]thiophen-7-sulfonyl)harnstoff (EP-A 0 796 83),
   3-(4-Ethoxy-6-ethyl-1,3,5-triazin-2-yl)-1-(2,3-dihydro-1,1-dioxo-2-methylbenzo[b]-thiophen-7-sulfonyl)harnstoff (EP-A 0 079 683),
   3-(4-Methoxy-6-methyl-1,3,5-triazin-2-yl)-1-(2-methoxycarbonyl-5-jod-phenylsulfonyl)-harnstoff (lodosulfuron-methyl und dessen Salze wie das Natriumsalz, WO 92/13845),
   DPX-66037, Triflusulfuron-methyl (s. Brighton Crop Prot. Conf. - Weeds - 1995, S. 853),
   CGA-277476, (s. Brighton Crop Prot. Conf. - Weeds - 1995, S. 79),
   Methyl-2-[3-(4,6-dimethoxypyrimidin-2-yl)ureidosulfonyl]-4-methansulfon-amido-methyl-benzoat (Mesosulfuron-methyl und dessen Salze wie das Natriumsalz, WO 95/10507),
   N,N-Dimethyl-2-[3-(4,6-dimethoxypyrimidin-2-yl)ureidosulfonyl]-4-formylamino-benzamid (Foramsulfuron und dessen Salze wie das Natriumsalz, WO 95/01344);
A2) Thienylsulfonylharnstoffe, z.B.
   1-(2-Methoxycarbonylthiophen-3-yl)-3-(4-methoxy-6-methyl-1,3,5-triazin-2-yl)harnstoff (Thifensulfuron-methyl);
A3) Pyrazolyisulfonylharnstoffe, z.B.
   1-(4-Ethoxycarbonyl-1-methylpyrazol-5-yl-sulfonyl)-3-(4,6-d imethoxypyrimidin-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference 'Weeds' 1991, Vol. 1, S. 45 ff.),
   DPX-A8947, Azimsulfuron, (s. Brighton Crop Prot. Conf. 'Weeds' 1995, S. 65);
A4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990));
A5) Pyridylsulfonylharnstoffe, z.B.
   1-(3-N,N-Dimethylaminocarbonylpyridin-2-ylsulfonyl)-3-(4,6-dimethoxypyrimidin-2-yl)harnstoff (Nicosulfuron),
   1-(3-Ethylsulfonylpyridin-2-ylsulfonyl)-3-(-(4,6-dimethoxypyrimidin-2-yl)harnstoff (Rimsulfuron),
   2-[3-(4,6-Dimethoxypyrimidin-2-yl)ureidosulfonyl]-6-trifluormethyl-3-pyridin-carbonsäuremethylester, Natriumsalz (DPX-KE 459, Flupyrsulfuron, s. Brighton Crop Prot. Conf. Weeds, 1995, S. 49), Trifloxysulfuron und dessen Natriumsalz;
A6) Alkoxyphenoxysulfonylharnstoffe, wie sie z.B. in EP-A 0 342 569 beschrieben sind, vorzugsweise 3-(4,6-Dimethoxypyrimidin-2-yl)-1-(2-ethoxyphenoxy)-sulfonylharnstoff (Ethoxysulfuron) oder dessen Salze wie das Natriumsalz;
A7) lmidazolylsulfonylharnstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus.

Typische Vertreter dieser Wirkstoffe sind unter anderem die nachfolgend aufgeführten Verbindungen und deren Salze wie die Natriumsalze: Amidosulfuron, Azimsulfuron, Bensulfuron-methyl, Chlorimuron-Ethyl, Chlorsulfuron, Cinosulfuron, Cyclosulfamuron, Ethametsulfuron-methyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Trifloxysulfuron und dessen Natriumsalz, Triflusulfuron-Methyl, lodosulfuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 1999)).

Weitere geeignete ALS-Inhibitoren sind z.B.
B) Imidazolinone, z.B.
   2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
   5-Ethyl-2-(4-isopropyl-4-methyl-5-oxo-2-imidazolin-2-yl)-pyridin-3-carbonsäure (Imazethapyr),
   2-(4-Isopropyl-4-methyl-5-oxo-2-imidazolin-2-yl)-chinolin-3-carbonsäure (Imazaquin),
   2-(4-Isopropyl-4-methyl-5-oxo-2-imidazolin-2-yl)-pyridin-3-carbonsäure (Imazapyr),
   5-Methyl-2-(4-isopropyl-4-methyl-5-oxo-2-imidazolin-2-yl)-pyridin-3-carbonsäure (Imazethamethapyr);
C) Triazolopyrimidinsulfonamid-Derivate, z.B.
   N-(2,6-Difluorphenyl)-7-methyl-1,2,4-triazolo[1,5-c]pyrimidin-2-sulfonamid (Flumetsulam),
   N-(2,6-Dichlor-3-methylphenyl)-5,7-dimethoxy-1,2,4-triazolo[1,5-c]pyrimidin-2-sulfonamid,
   N-(2,6-Difluorphenyl)-7-fluor-5-methoxy-1,2,4-triazolo[1,5-c]pyrimidin-2-sulfonamid,
   N-(2,6-Dichlor-3-methylphenyl)-7-chlor-5-methoxy-1,2,4-triazolo[1,5-c]pyrimidin-2-sulfonamid,
   N-(2-Chlor-6-methoxycarbonyl)-5,7-dimethyl-1,2,4-triazolo[1,5-c]pyrimidin-2-sulfonamid (EP-A 0 343 752, US-A 4,988,812);
D) Pyrimidinyloxy-pyridincarbonsäure- bzw. Pyrimidinyloxybenzoesäure-Derivate, z.B.
   3-(4,6-Dimethoxypyrimidin-2-yl)-oxy-pyridin-2-carbonsäurebenzyl-ester (EP-A 0 249 707),
   3-(4,6-Dimethoxypyrimidin-2-yl)-oxy-pyridin-2-carbonsäuremethylester (EP-A 0 249 707),
   2,6-Bis[(4,6-dimethoxypyrimidin-2-yl)-oxy]-benzoesäure (EP-A 0 321 846),
   2,6-Bis[(4,6-dimethoxypyrimidin-2-yl)-oxy]-benzoesäure-1-(ethoxycarbonyl-oxyethyl)-ester (EP-A 0 472 113).

Geeignete von ALS-Inhibitoren verschiedene herbizide Wirkstoffe, die in den erfindungsgemäßen Mikroemulsionskonzentraten als Komponente enthalten sein können, sind beispielsweise:
E) Herbizide vom Typ der Phenoxyphenoxy- und
   Heteroaryloxyphenoxycarbonsäure-Derivate, wie
E1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl),
   2-(4-(4-Brom-2-chlorphenoxy)phenoxy)propionsäuremethylester (DE-A 26 01 548),
   2-(4-(4-Brom-2-fluorphenoxy)phenoxy)propionsäuremethylester (US-A 4,808,750),
   2-(4-(2-Chlor-4-trifluormethylphenoxy)phenoxy)propionsäuremethylester (DE-A 24 33 067),
   2-(4-(2-Fluor-4-trifluormethylphenoxy)phenoxy)propionsäuremethylester (US-A 4,808,750),
   2-(4-(2,4-Dichlorbenzyl)phenoxy)propionsäuremethylester (DE-A 24 17 487),
   4-(4-(4-Trifluormethylphenoxy)phenoxy)pent-2-en-säureethylester,
   2-(4-(4-Trifluormethylphenoxy)phenoxy)propionsäuremethylester (DE-A 24 33 067);
E2) "Einkernige" Heteroaryloxyphenoxy-alkancarbonsäure-Derivate, z.B.
   2-(4-(3,5-Dichlorpyridyl-2-oxy)phenoxy)propionsäureethylester (EP-A 0 002 925),
   2-(4-(3,5-Dichlorpyridyl-2-oxy)phenoxy)propionsäurepropargylester (EP-A 0 003 114),
   2-(4-(3-Chlor-5-trifluormethyl-2-pyridyloxy)phenoxy)propionsäure-methylester (EP-A 0 003 890),
   2-(4-(3-Chlor-5-trifluormethyl-2-pyridyloxy)phenoxy)propionsäureethylester (EP-A 0 003 890),
   2-(4-(5-Chlor-3-fluor-2-pyridyloxy)phenoxy)propionsäurepropargylester (EP-A 0 191 736),
   2-(4-(5-Trifluormethyl-2-pyridyloxy)phenoxy)propionsäurebutylester (Fluazifop-butyl);
E3) "Zweikernige" Heteroaryloxyphenoxy-alkancarbonsäure-Derivate, z.B. 2-(4-(6-Chlor-2-chinoxalyloxy)phenoxy)propionsäuremethylester und -ethylester (Quizalofopmethyl und Quizalofopethyl),
   2-(4-(6-Fluor-2-chinoxalyloxy)phenoxy)propionsäuremethylester (s. J. Pest. Sci. Vol. 10, 61 (1985)),
   2-(4-(6-Chlor-2-chinoxalyloxy)phenoxy)propionsäure-2-isopropylidenaminooxy-ethylester (Propaquizafop),
   2-(4-(6-Chlorbenzoxazol-2-yl-oxy)phenoxy)propionsäureethylester (Fenoxaprop-ethyl), dessen D(+) Isomer (Fenoxaprop-P-ethyl) und 2-(4-(6-Chlorbenzthiazol-2-yloxy)phenoxy)propionsäureethylester (DE-A 26 40 730),
   2-(4-(6-Chlorchinoxalyloxy)phenoxy)propionsäure-tetrahydro-2-furylmethylester (EP-A 0 323 727);
F) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
G) Thiocarbamate, z.B.
   S-Ethyl-N,N-dipropylthiocarbamat (EPTC),
   S-Ethyl-N,N-diisobutylthiocarbamat (Butylate);
H) Cyclohexandionoxime, z.B.
   3-(1-Allyloxyiminobutyl)-4-hydroxy-6,6-dimethyl-2-oxocyclohex-3-encarbon-säuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-5-(2-phenylthiopropyl)-3-hydroxy-cyclohex-2-en-1-on (Cloproxydim),
   2-(1-(3-Chlorallyloxy)iminobutyl)-5-(2-ethylthiopropyl)-3-hydroxy-cyclohex-2-en-1-on,
   2-(1-(3-Chlorallyloxy)iminopropyl)-5-(2-ethylthiopropyl)-3-hydroxy-cyclohex-2-en-1-on (Clethodim),
   2-(1-Ethoxyiminobutyl)-3-hydroxy-5-(thian-3-yl)-cyclohex-2-enon (Cycloxydim),
   2-(1-Ethoxyiminopropyl)-5-(2,4,6-trimethylphenyl)-3-hydroxy-cyclohex-2-en-1-on (Tralkoxydim);
I) Benzoylcyclohexandione, z.B.
   2-(2-Chlor-4-rnethylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634),
   2-(2-Nitro-4-methylsulfonylbenzoyl)-4,4-dimethylcyclohexan-1,3-dion (WO 91/13548, Mesotrione);
J) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
K) Alkylazine, z.B. wie beschrieben in WO-A 97/08156, WO-A-97/31904, DE-A-19826670, WO-A-98/15536, WO-A-8/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (K) 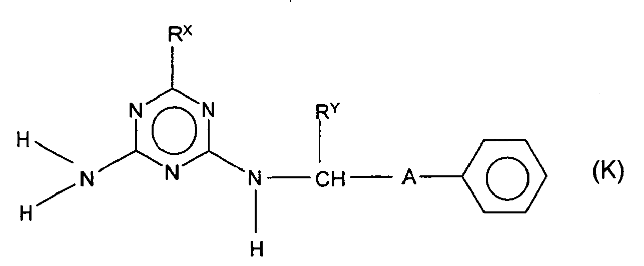 worin
   - R^{X}: (C₁-C₄)-Alkyl oder (C₁-C₄)-Haloalkyl;
   - R^{Y}: (C₁-C₄)-Alkyl, (C₃-C₆)-Cycloalkyl oder (C₃-C₆)-Cycloalkyl-(C₁-C₄)-Alkyl und
   - A: -CH₂-, -CH₂-CH₂-, -CH₂-CH₂-CH₂-, -O-, -CH₂-CH₂-O-, -CH₂-CH₂-CH₂-O-
   bedeuten, besonders bevorzugt solche der Formel K1-K7 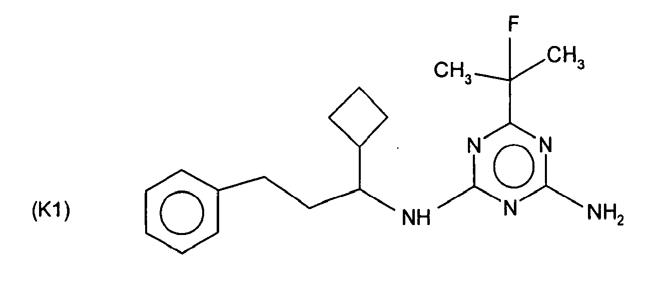 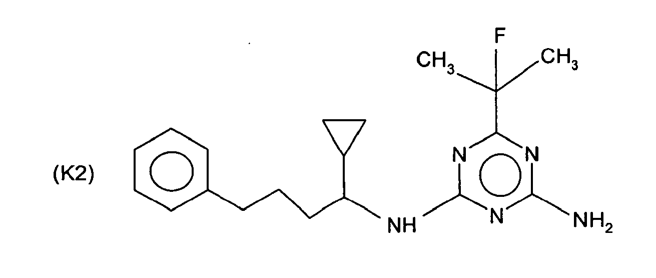 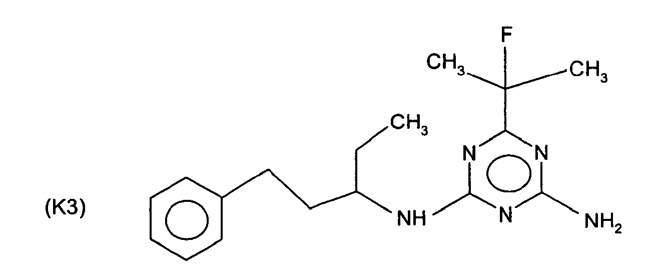 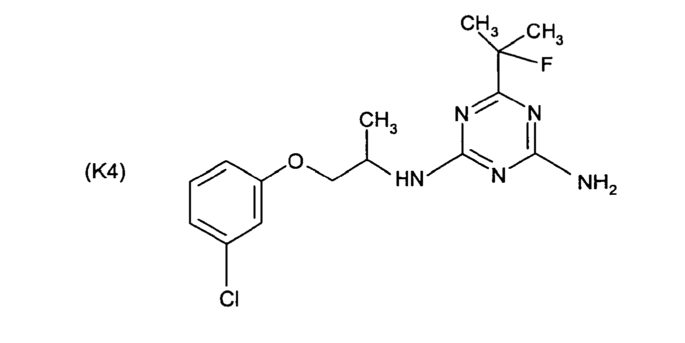 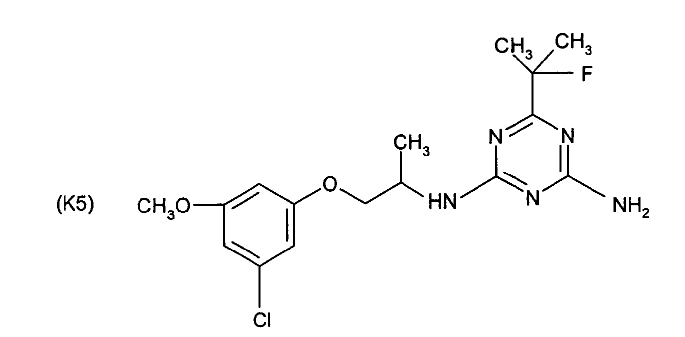 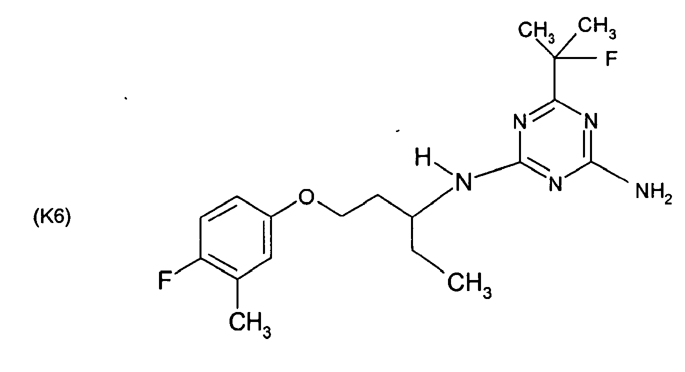 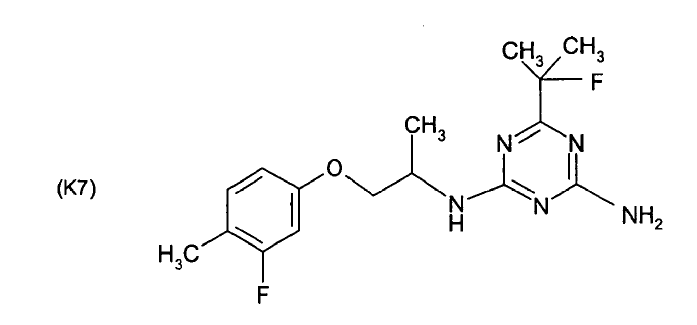
L) phosphorhaltige Herbizide, z.B. eine oder mehrere Verbindungen der Formel (IV) oder deren Derivate wie Salze, 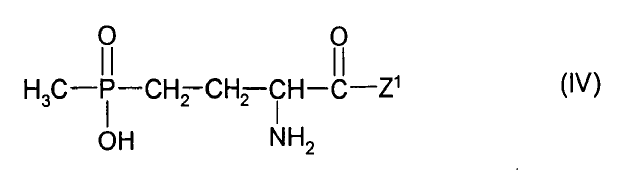 worin
   Z¹ einen Rest der Formel -OM, -NHCH(CH₃)CONHCH(CH₃)CO₂M oder
   -NHCH(CH₃)CONHCH[CH₂CH(CH₃)₂]CO₂M und
   M = H oder ein Salz bildendes Kation bedeuten,
   und/oder eine oder mehrere Verbindungen der Formel (V) oder deren Derivate wie Salze, 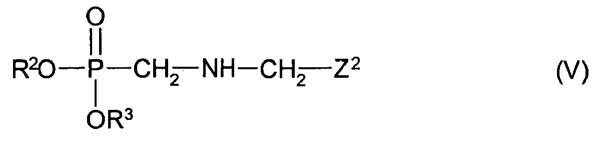
worin
Z² einen Rest der Formel CN oder CO₂R¹ bedeutet, in dem R¹ = Q oder ein Salz bildendes Kation ist und dabei Q = H, Alkyl, Alkenyl, Alkoxyalkyl oder C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, und
R²,R³ jeweils unabhängig voneinander H, Alkyl, C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, N0₂ und CN substituiert ist, oder Biphenyl oder ein Salz bildendes Kation bedeuten.

Beispiele für Wirkstoffe der Formel (IV) und (V) sind folgende:
- Glufosinate und dessen Ammoniumsalz in racemischer Form, d.h. 2-Amino-4-[hydroxy(methyl)phosphinoyl]-butansäure bzw. dessen Ammoniumsalz,
- das L-Enantiomer von Glufosinate und dessen Ammoniumsalz,
- Bilanafos/Bialaphos, d.h. L-2-Amino-4-[hydroxy(methyl)phosphinoyl]-butanoyl-L-alaninyl-L-alanin und dessen Natriumsalz
- Glyphosate.

M) Carbamate, z.B. Asulam, Carbetamide, Chloropham und Propham;
N) Benzofurane, z.B. Benfuresate und Ethofumesate;
O) Phytohormone;
P) Auxine und Auxinanaloga, z.B. 4-Indol-3-buttersäure, Indol-3-essigsäure, 1-Naphthylessigsäure, 2-(1-Naphthyl)acetamid und 2-Naphthyloxyessigsäure;
Q) Zytokinine, z.B. Cythokinin, Kinetin und 6-Benzylaminopurin;
R) Gibberelline, z.B. Gibberillinsäure, Gibberillin A4 und A7;
S) Absissinsäure- und deren Derivate;
T) Ethylenvorläufer, z.B. Ethephon;
U) Herbizide aus der Gruppe der Fettsäuresynthetase-Inhibitoren;
V) Harnstoffe, z.B. Chlorotoluron, Dimefuron, Diuron, Fluometuron, Isoproturon, Isouron, Karbutilate, Linuron, Methabenzthiazuron, Metobenzuron, Metoxuron, Monolinuron, Neburon, Siduron und Tebuthiuron und
W) Metamitron;
X) Hydroxybenzonitrile, z.B. wie Bromoxynil und loxynil und deren Salze und Ester, wie Bromoxyniloctanoat und loxyniloctanoat.

Die agrochemischen Wirkstoffe können auch Wachstumsregulatoren sein. Beispiele hierfür sind Terbufos, Cyclanilide und Thidiazuron.

Die Herbizide (Pflanzenwuchsregulatoren) der Gruppen A bis X sind beispielsweise aus den oben jeweils genannten Schriften und/oder aus "The Pesticide Manual", 12. Auflage (2000) und 13. Auflage (2003), The British Crop Protection Council, "Agricultural Chemicals Book II - Herbicides -", by W.T. Thompson, Thompson Publications, Fresno CA, USA 1990 und "Farm Chemicals Handbook '90", Meister Publishing Company, Willoughby OH, USA,1990, bekannt.

Bevorzugt sind für Fungizide (Bakterizide), Insektizide (Akarizide, Nematizide) und Herbizide (Pflanzenwuchsregulatoren):
Atrazin, Acetochlor, Aclonifen, Alachlor, Amidochlor, Amidosulfuron, Azimsulfuron, Alloxydim, Amitraz, Anilofos, Asulam, Acetamiprid, Acrinathrin, Aldicarb, Azinphosmethyl, Amicarbazone, Bentazon, Bensulfuron(-methyl), Bromoxynil(-octanoat/heptanoat), Butachlor, Bispyribac(-sodium), Benzobicyclon, Benzofenap, Butroxydim, Bitertanol, Bromuconazole, Benfuresate, Beta-Cyfluthrin, Chlorsulfuron, Chlorimuron, Clomazone, Clopyralid, Cinosulfuron, Cyclosulfamuron, Clethodim, Clodinafop-propargyl, Cycloxydim, Cyhalofop-butyl, Cypermethrin, Carbaryl, Cyfluthrin, Cyanazine, 2,4-D-Ester, 2,4-DB-Ester, 2,4-DP-Ester, CMPP-Ester, Cyclanilide, Carbendazim, Carpropamid, Cyproconazole, Chlortoluron, Diclofop-methyl, Desmedipham, Diflufenican, Dicamba, Deltamethrin, Diuron, EPTC, Ethoxysulfuron, Ethofumesate, Ethephon, Edifenphos, Endosulfan, Ethoprophos, Flazasulfuron, Florasulam, Flucarbazone(-sodium), Flumetsulam, Flufenacet, Fluoroglykofen, Fluroxypyr, Flupyrsulfuron, Foramsulfuron, Flumioxazin, Flumiclorac, Fomesafen, Fenoxaprop, Fenoxaprop-ethyl, Fenoxaprop-P, Fenoxaprop-P-ethyl, Fluazifop, Fluazifop-P-butyl, Fluazifop-butyl, Fipronil, Fenamidone, Fenhexamid, Fentins, Fluquinconazole, Fosetyl Aluminium, Fentrazamide, Flurtamone, Fenamiphos, Fenthion, Glufosinate(-ammonium), Glyphosate, Halosulfuron, Haloxyfop, Haloxyfop-P, Haloxyfop-etotyl, Haloxyfop-P-methyl, Imazamox, Imazapic, Imazethapyr, Imazaquin, Imazapyr, Imazosulfuron, lodosulfuron, lodosulfuron(-methyl), loxynil(-octanoat), Isoxaflutole und dessen Diketonitrile, Isoxachlortole, Imidacloprid, lsoxadifen-ethyl, Iprodione, Iprovalincarb, Isoproturon, MCPA-Ester, MCPB, Mesotrione, Metamifop, Metosulam, Mesosulfuron(-methyl), (S-)Metolachlor, Metsulfuron-methyl, Metamitron, Metribuzin, Mefenpyr-diethyl, Mefenacet, Methamidophos, Methiocarb, Nicosulfuron, Niclosamide, Lactofen, Linuron, Oxyfluorfen, Oxazinon, Oxadiargyl, Oxadiazon, Oxydemeton-methyl, Pendimethalin, Phenmedipham, Picloram, Pinoxaden, Primisulfuron-methyl, Prosulfuron, Propanil, Propoxycarbazone(-sodium), Pyrazosulfuron(-methyl), Profoxydim, Propaquizafop, Pyrazolynate, Pyrazoxyfen, Prochloraz, Pencycuron, Prochloraz, Propamocarb HCI, Propineb, Pyrimethalin, Phosalone, Prothiofos, Quizalofop-P-tefuryl, Quizalofop-P-ethyl, Rimsulfuron, Sulfentrazone, Sulfosulfuron, Sulfometuron, Sethoxydim, Sulcotrione, Spiroxamine, Silafluofen, Terbuthylazin, Thifensulfuron, Triasulfuron, Tribenuron, Triclopyr, Triflusulfuron-methyl, Trifluralin, Tritosulfuron, Topramezone, Tepraloxydim, Tralkoxydim, Terbufos, Thidiazuron, Tebuconazole, Tolylfluanid-Dichlofluanid, Tradimefon, Tradimenol, Trifloxystrobin, Thiacloprid, Thiodicarb, Tralomethrin, Trazophos, Trichlorfon, Triflumuron, Triticonazole und Isoxapyrifop, und gegebenenfalls deren Ester und Salze.

Die vorstehend aufgeführten agrochemischen Wirkstoffe sind z:B. bekannt aus "The Pesticide Manual", 12. Auflage (2000) und 13. Auflage (2003), The British Crop Protection Council oder den nach den einzelnen Wirkstoffen aufgeführten Literaturstellen.

Die agrochemischen Wirkstoffe können auch Safener sein. Beispiele hierfür sind unter anderem:
a) Verbindungen der Formeln (S-II) bis (S-IV), 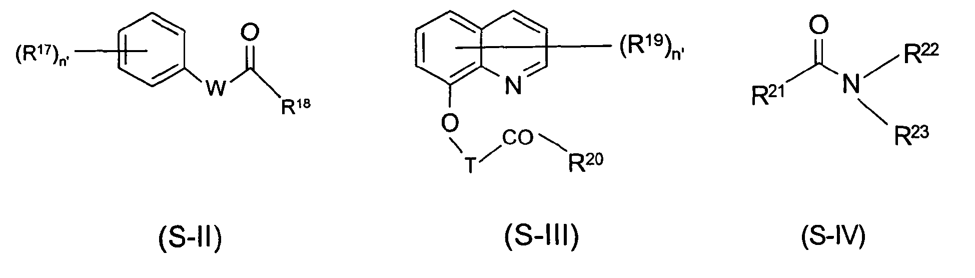 wobei die Symbole und Indizes folgende Bedeutungen haben:
   - n': ist eine natürliche Zahl von 0 bis 5, vorzugsweise 0 bis 3;
   - T: ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist;
   - W: ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-Atom und höchstens ein O-Atom im Ring enthalten ist, vorzugsweise ein Rest aus der Gruppe (W1) bis (W4), 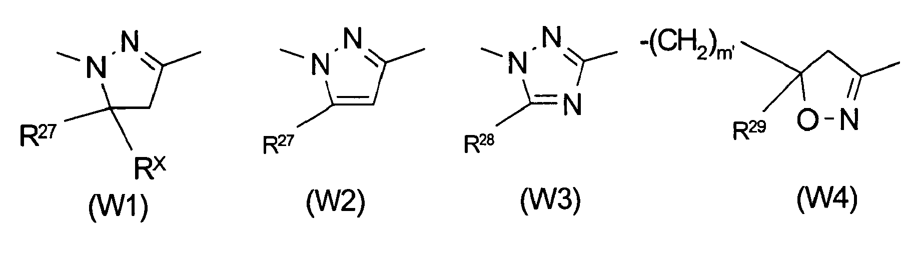
   - m': ist 0 oder 1;
   - R¹⁷ R¹⁹: sind gleich oder verschieden Halogen,
   (C₁-C₄)Alkyl, (C₁-C₄)Alkoxy, Nitro oder (C₁-C₄)Haloalkyl;
   - R¹⁸, R²⁰: sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-II) bzw. (S-III) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise ein Rest der Formel OR²⁴, NHR²⁵ oder N(CH₃)₂, insbesondere der Formel OR²⁴;
   - R²⁴: ist Wasserstoff oder ein unsubstituierter oder substituierter aliphatischer Kohlenwasserstoffrest, vorzugsweise mit insgesamt 1 bis 18 C-Atomen;
   - R²⁵: ist Wasserstoff, (C₁-C₆)Alkyl, (C₁-C₆)Alkoxy oder substituiertes oder unsubstituiertes Phenyl;
   - R^{X}: ist H, (C₁-C₈)Alkyl, C₁-C₈(Haloalkyl), (C₁-C₄)Alkoxy(C₁-C₈)Alkyl, Cyano oder COOR²⁶, worin R²⁶ Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkyl-silyl ist;
   - R²⁷, R²⁸, R²⁹: sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl;
   - R²¹: ist (C₁-C₄)Alkyl, (C₁-C₄)Haloalkyl, (C₂-C₄)Alkenyl, (C₂-C₄)Haloalkenyl, (C₃-C₇)Cycloalkyl, vorzugsweise Dichlormethyl;
   - R²², R²³: ist gleich oder verschieden Wasserstoff, (C₁-C₄)Alkyl, (C₂-C₄)Alkenyl, (C₂-C₄)Alkinyl, (C₁-C₄)Haloalkyl, (C₂-C₄)Haloalkenyl, (C₁-C₄)Alkylcarbamoyl-(C₁-C₄)alkyl, (C₂-C₄)Alkenylcarbamoyl-(C₁-C₄)alkyl, (C₁-C₄)Alkoxy-(C₁-C₄)alkyl, Dioxolanyl-(C₁-C₄)alkyl, Thiazolyl, Furyl, Furylalkyl, Thienyl, Piperidyl, substituiertes oder unsubstituiertes Phenyl, oder R²² und R²³ bilden zusammen einen substituierten oder unsubstituierten heterocyclischen Ring, vorzugsweise einen Oxazolidin-, Thiazolidin-, Piperidin-, Morpholin-, Hexahydropyrimidin- oder Benzoxazinring;

   - Verbindungen vom Typ der Dichlorphenylpyrazolin-3-carbonsäure (d.h. der Formel (S-II), worin W = (W1) und (R¹⁷)_{n'} = 2,4-Cl₂), vorzugsweise Verbindungen wie 1-(2,4-Dichlorphenyl)-5-(ethoxycarbonyl)-5-methyl-2-pyrazolin-3-carbonsäureethylester (II-1, Mefenpyr-diethyl), Mefenpyr-dimethyl und Mefenpyr (II-0), und verwandte Verbindungen, wie sie in der WO-A-91/07874 beschrieben sind;
   - Derivate der Dichlorphenylpyrazolcarbonsäure (d.h. der Formel (S-II), worin W = (W2) und (R¹⁷)_{n'} = 2,4-Cl₂ ist), vorzugsweise Verbindungen wie 1-(2,4-Dichlorphenyl)-5-methyl-pyrazol-3-carbonsäureethylester (II-2), 1-(2,4-Dichlorphenyl)-5-isopropyl-pyrazol-3-carbonsäureethylester (II-3), 1-(2,4-Dichlorphenyl)-5-(1,1-dimethyl-ethyl)pyrazol-3-carbonsäureethylester (II-4), 1-(2,4-Dichlorphenyl)-5-phenyl-pyrazol-3-carbonsäureethylester (II-5) und verwandte Verbindungen, wie sie in EP-A-0333131 und EP-A-0269806 beschrieben sind;
   - Verbindungen vom Typ der Triazolcarbonsäuren (d.h. der Formel (S-II), worin W = (W3) und (R¹⁷)_{n'} = 2,4-Cl₂ ist), vorzugsweise Verbindungen wie Fenchlorazol-ethyl, d.h. 1-(2,4-Dichlorphenyl)-5-trichlormethyl-(1 H)-1,2,4-triazol-3-carbonsäureethylester (II-6), und verwandte Verbindungen (siehe EP-A-0174562 und EP-A-0346620);
   - Verbindungen vom Typ der 5-Benzyl- oder 5-Phenyl-2-isoxazolin-3-carbonsäure oder der 5,5-Diphenyl-2-isoxazolin-3-carbonsäure wie Isoxadifen (II-12), (worin W = (W4) ist), vorzugsweise Verbindungen wie 5-(2,4-Dichlorbenzyl)-2-isoxazolin-3-carbonsäureethylester (II-7) oder 5-Phenyl-2-isoxazolin-3-carbonsäureethylester (II-8) und verwandte Verbindungen, wie sie in WO-A- 91/08202 beschrieben sind, oder der 5,5-Diphenyl-2-isoxazolin-carbonsäureethylester (II-9, Isoxadifen-ethyl) oder -n-propylester (II-10) oder der 5-(4-Fluorphenyl)-5-phenyl-2-isoxazolin-3-carbonsäureethylester (II-11), wie sie in der WO-A-95/07897 beschrieben sind.
   - Verbindungen vom Typ der 8-Chinolinoxyessigsäure, z.B. solche der Formel (S-III), worin (R¹⁹)_{n'} = 5-Cl, R²⁰ = OR²⁴ und T = CH₂ ist, vorzugsweise die Verbindungen (5-Chlor-8-chinolinoxy)essigsäure-(1-methylhexyl)-ester (III-1, Cloquintocet-mexyl), (5-Chlor-8-chinolinoxy)essigsäure-(1,3-dimethyl-but-1-yl)-ester (III-2), (5-Chlor-8-chinolinoxy)essigsäure-4-allyl-oxy-butylester (III-3), (5-Chlor-8-chinolinoxy)essigsäure-1-allyloxy-prop-2-ylester (III-4), (5-Chlor-8-chinolinoxy)essigsäureethylester (III-5), (5-Chlor-8-chinolinoxy)essigsäuremethylester (III-6), (5-Chlor-8-chinolinoxy)essigsäureallylester (III-7), (5-Chlor-8-chinolinoxy)essigsäure-2-(2-propyliden-iminoxy)-1-ethylester (III-8), (5-Chlor-8-chinolinoxy)essigsäure-2-oxo-prop-1-ylester (III-9), (5-Chlor-8-chinolinoxy)essigsäure (III-10) und dessen Salze wie sie z.B. in der WO-A-02/34048 beschrieben sind, und verwandte Verbindungen, wie sie in EP-A-0860750, EP-A-0094349 und EP-A-0191736 oder EP-A-0492366 beschrieben sind.
   - Verbindungen vom Typ der (5-Chlor-8-chinolinoxy)-malonsäure, d.h. der Formel (S-III), worin (R¹⁹)_{n'} = 5-Cl, R²⁰= OR²⁴, T = -CH(COO-Alkyl)- ist, vorzugsweise die Verbindungen (5-Chlor-8-chinolinoxy)-malonsäure-diethylester (III-11), (5-Chlor-8-chinolinoxy)-malonsäurediallylester, (5-Chlor-8-chinolinoxy)-malonsäure-methyl-ethylester und verwandte Verbindungen, wie sie in EP-A-0582198 beschrieben sind.
   - Verbindungen vom Typ der Dichloracetamide, d.h. der Formel (S-lV), vorzugsweise: N,N-Diallyl-2,2-dichloracetamid (Dichlormid (IV-1), aus US 4,137,070), 4-Dichloracetyl-3,4-dihydro-3-methyl-2H-1,4-benzoxazin (IV-2, Benoxacor, aus EP 0149974), N1,N2-Diallyl-N2-dichloracetylglycinamid (DKA-24 (IV-3), aus HU 2143821), 4-Dichloracetyl-1-oxa-4-aza-spiro[4,5]decan (AD-67), 2,2-Dichlor-N-(1,3-dioxolan-2-ylmethyl)-N-(2-propenyl)acetamid (PPG-1292), 3-Dichloracetyl-2,2,5-trimethyloxazolidin (R-29148, IV-4), 3-Dichloracetyl-2,2-dimethyl-5-phenyloxazolidin, 3-Dichloracetyl-2,2-dimethyl-5-(2-thienyl)oxazolidin, 3-Dichloracetyl-5-(2-furanyl)-2,2-dimethyloxazolidin (Furilazole (IV-5), MON 13900), 1-Dichloracetyl-hexahydro-3,3,8a-trimethylpyrrolo[1,2-a]pyrimidin-6(2H)-on (Dicyclonon, BAS 145138),
b) eine oder mehreren Verbindungen aus Gruppe:
   1,8-Naphthalsäureanhydrid, Methyl-diphenylmethoxyacetat, 1-(2-Chlorbenzyl)-3-(1-methyl-1-phenylethyl)harnstoff (Cumyluron), O,O-Diethyl S-2-ethylthioethyl phosphordithioat (Disulfoton), 4-Chlorphenyl-methylcarbamat (Mephenate), O,O-Diethyl-O-phenylphosphorotioat (Dietholate), 4-Carboxy-3,4-dihydro-2H-1-benzopyran-4-essigsäure (CL-304415, CAS-Regno: 31541-57-8), Cyanomethoxyimino(phenyl)acetonitril (Cyometrinil), 1,3-Dioxolan-2-ylmethoxyimino(phenyl)acetonitril (Oxabetrinil), 4'-Chlor-2,2,2-trifluoracetophenon-O-1,3-dioxolan-2-ylmethyloxim (Fluxofenim), 4,6-Dichlor-2-phenylpyrimidin (Fenclorim), Benzyl-2-chlor-4-trifluormethyl-1,3-thiazol-5-carboxylat (Flurazole), 2-Dichlormethyl-2-methyl-1,3-dioxolan (MG-191), N-(4-Methylphenyl)-N'-(1-methyl-1-phenylethyl)harnstoff (Dymron), (2,4-Dichlorphenoxy)essigsäure (2,4-D), (4-Chlorphenoxy)essigsäure, (R,S)-2-(4-Chlor-o-tolyloxy)propionsäure (Mecoprop), 4-(2,4-Dichlorphenoxy)buttersäure (2,4-DB), (4-Chlor-o-tolyloxy)essigsäure (MCPA), 4-(4-Chlor-o-tolyloxy)buttersäure, 4-(4-Chlorphenoxy)buttersäure, 3,6-Dichlor-2-methoxybenzoesäure (Dicamba), 1-(Ethoxycarbonyl)ethyl 3,6-dichlor-2-methoxybenzoat (Lactidichlor) sowie deren Salze und Ester, vorzugsweise (C₁-C₈);
c) N-Acylsulfonamide der Formel (S-V) und ihre Salze, 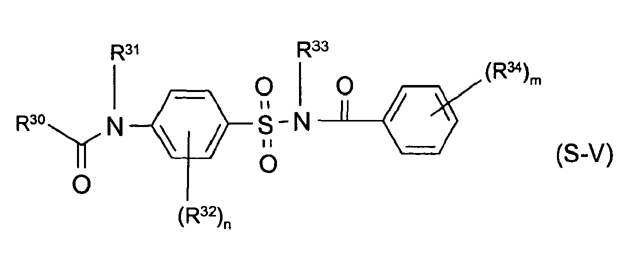 worin
   - R³⁰: Wasserstoff, einen Kohlenwasserstoffrest, einen Kohlenwasserstoffoxyrest, einen Kohlenwasserstoffthiorest oder einen Heterocyclylrest, der vorzugsweise über ein C-Atom gebunden ist, wobei jeder der letztgenannten 4 Reste unsubstituiert oder durch einen oder mehrere gleiche oder verschiedene Reste aus der Gruppe Halogen, Cyano, Nitro, Amino, Hydroxy, Carboxy, Formyl, Carbonamid, Sulfonamid und Reste der Formel -Z^{a}-R^{a} substituiert ist,
   wobei jeder Kohlenwasserstoffteil vorzugsweise 1 bis 20 C-Atome aufweist und ein C-haltiger Rest R³⁰ inklusive Substituenten vorzugsweise 1 bis 30 C-Atome aufweist;
   - R³¹: Wasserstoff oder (C₁-C₄)-Alkyl, vorzugsweise Wasserstoff, oder
   - R³⁰ und R³¹: zusammen mit der Gruppe der Formel -CO-N- den Rest eines 3- bis 8-gliedrigen gesättigten oder ungesättigten Rings;
   - R³²: gleich oder verschieden Halogen, Cyano, Nitro, Amino, Hydroxy, Carboxy, Formyl, CONH₂, SO₂NH₂ oder einen Rest der Formel -Z^{b}-R^{b} ;
   - R³³: Wasserstoff oder (C₁-C₄)-Alkyl, vorzugsweise H;
   - R³⁴: gleich oder verschieden Halogen, Cyano, Nitro, Amino, Hydroxy, Carboxy, CHO, CONH₂, SO₂NH₂ oder einen Rest der Formel -Z^{c}-R^{c};
   - R^{a}: einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - R^{b},R^{c}: gleich oder verschieden einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Phosphoryl, Halogen-(C₁-C₄)-alkoxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - Z^{a}: eine divalente Gruppe der Formel -O-, -S-, -CO-, -CS-, -CO-O-, -CO-S-, -O-CO-, -S-CO-, -SO-, -SO₂-, -NR*-, -CO-NR*-, -NR*-CO-, -SO₂-NR*- oder -NR^{*}-SO₂-, wobei die rechts angegebene Bindung der jeweiligen divalenten Gruppe die Bindung zum Rest R^{a} ist und wobei die R* in den letztgenannten 5 Resten unabhängig voneinander jeweils H, (C₁-C₄)-Alkyl oder Halo-(C₁-C₄)-alkyl bedeuten;
   - Z^{b}, Z^{c}: unabhängig voneinander eine direkte Bindung oder eine divalente Gruppe der Formel -O-, -S-, -CO-, -CS-, -CO-O-, -CO-S-, -O-CO-, -S-CO-, -SO-, -SO₂-, -NR*-, -SO₂-NR*-, -NR*-SO₂-, -CO-NR*-oder-NR*-CO-, wobei die rechts angegebene Bindung der jeweiligen divalenten Gruppe die Bindung zum Rest R^{b} bzw. R^{c} ist und wobei die R* in den letztgenannten 5 Resten unabhängig voneinander jeweils H, (C₁-C₄)-Alkyl oder Halo-(C₁-C₄)-alkyl bedeuten;
   - n: eine ganze Zahl von 0 bis 4, vorzugsweise 0, 1 oder 2, insbesondere 0 oder 1, und
   - m: eine ganze Zahl von 0 bis 5, vorzugsweise 0, 1, 2 oder 3, insbesondere 0, 1 oder 2; bedeuten;
vorzugsweise Safener folgender Untergruppen von Verbindungen der Formeln (S-II) bis (S-IV):
vorzugsweise Safener von Verbindungen der Formel (S-V), worin
- R³⁰ = H₃C-O-CH₂-, R³¹ = R³³ = H, R³⁴ = 2-OMe ist (V-1),
- R³⁰ = H₃C-O-CH₂-, R³¹ = R³³ = H, R³⁴ = 2-OMe-5-Cl ist (V-2),
- R³⁰ = Cyclopropyl, R³¹ = R³³ = H, R³⁴ = 2-OMe ist (V-3),
- R³⁰ = Cyclopropyl, R³¹ = R³³ = H, R³⁴ = 2-OMe-5-Cl ist (V-4),
- R³⁰ = Cyclopropyl, R³¹ = R³³ = H, R³⁴= 2-Me ist (V-5),
- R³⁰ = tert. Butyl, R³¹ = R³³ = H, R³⁴ = 2-OMe ist (V-6).

d) Acylsulfamoylbenzoesäureamide der allgemeinen Formel (S-Vl), gegebenenfalls auch in Salzform, 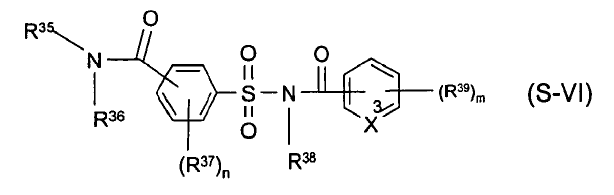 worin
   - X³: CH oder N;
   - R³⁵: Wasserstoff, Heterocyclyl oder einen Kohlenwasserstoffrest, wobei die beiden letztgenannten Reste gegebenenfalls durch einen oder mehrere, gleiche oder verschiedene Reste aus der Gruppe Halogen, Cyano, Nitro, Amino, Hydroxy, Carboxy, CHO, CONH₂, S0₂NH₂ und Z^{a}-R^{a} substituiert sind;
   - R³⁶: Wasserstoff, Hydroxy, (C₁-C₆)-Alkyl, (C₂-C₆)-Alkenyl, (C₂-C₆)-Alkinyl, (C₁-C₆)-Alkoxy, (C₂-C₆)-Alkenyloxy, wobei die fünf letztgenannten Reste gegebenenfalls durch einen oder mehrere, gleiche oder verschiedene Reste aus der Gruppe Halogen, Hydroxy, (C₁-C₄)-Alkyl, (C₁-C₄)-Alkoxy und (C₁-C₄)-Alkylthio substituiert sind, oder
   - R³⁵ und R³⁶: zusammen mit dem sie tragenden Stickstoffatom einen 3- bis 8-gliedrigen gesättigten oder ungesättigten Ring;
   - R³⁷: Halogen, Cyano, Nitro, Amino, Hydroxy, Carboxy, CHO, CONH₂, SO₂NH₂ oder Z^{b}-R^{b};
   - R³⁸: Wasserstoff, (C₁-C₄)-Alkyl, (C₂-C₄)-Alkenyl oder (C₂-C₄)-Alkinyl;
   - R³⁹: Halogen, Cyano, Nitro, Amino, Hydroxy, Carboxy, Phosphoryl, CHO, CONH₂, SO₂NH₂ oder Z^{c}-R^{c};
   - R^{a}: einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Mono- und Di-[(C₁-C₄)-alkyl]-amino substituiert sind;
   - R^{b}, R^{c}: gleich oder verschieden einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Phosphoryl, (C₁-C₄)-Haloalkoxy, Mono- und Di-[(C₁-C₄)-alkyl]-amino substituiert sind;
   - Z^{a}: eine divalente Einheit aus der Gruppe O, S, CO, CS, C(O)O, C(O)S, SO, SO₂, NR^{d}, C(O)NR^{d} oder SO₂NR^{d};
   - Z^{b}, Z^{c}: gleich oder verschieden eine direkte Bindung oder eine divalente Einheit aus der Gruppe O, S, CO, CS, C(O)O, C(O)S, SO, SO₂, NR^{d}, S0₂NR^{d} oder C(O)NR^{d};
   - R^{d}: Wasserstoff, (C₁-C₄)-Alkyl oder (C₁-C₄)-Haloalkyl;
   - n: eine ganze Zahl von 0 bis 4, und
   - m: für den Fall, dass X für CH steht, eine ganze Zahl von 0 bis 5, und für den Fall, dass X für N steht, eine ganze Zahl von 0 bis 4 bedeuten;
vorzugsweise Safener von Verbindungen der Formel (S-Vl), in der
- X³: CH;
- R³⁵: Wasserstoff, (C₁-C₆)-Alkyl, (C₃-C₆)-Cycloalkyl, (C₂-C₆)-Alkenyl, (C₅-C₆)-Cycloalkenyl, Phenyl oder 3- bis 6-gliedriges Heterocyclyl mit bis zu drei Heteroatomen aus der Gruppe Stickstoff, Sauerstoff und Schwefel, wobei die sechs letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
- R³⁶: Wasserstoff, (C₁-C₆)-Alkyl, (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, Hydroxy, (C₁-C₄)-Alkyl, (C₁-C₄)-Alkoxy und (C₁-C₄)-Alkylthio substituiert sind;
- R³⁷: Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
- R³⁸: Wasserstoff;
- R³⁹: Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
- n: 0, 1 oder 2 und
- m: 1 oder 2 bedeuten.

Insbesondere Verbindungen vom Typ der Acylsulfamoylbenzoesäureamide der nachfolgenden Formel (S-VII), die z.B. bekannt sind aus WO-A-99/16744, 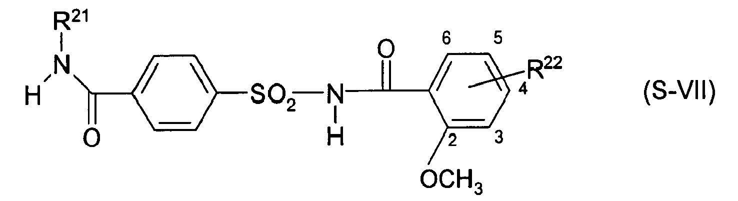 worin
R²¹ = Cyclo-Propyl und R²² = H ist (S3-1 = 4-Cyclopropylaminocarbonyl-N-(2-methoxybenzoyl)benzolsulfonamid; Cyprosulfamide);
R²¹ = Cyclo-Propyl und R²² = 5-Cl ist (S3-2),
R²¹ = Ethyl und R²² = H ist (S3-3),
R²¹ = iso-Propyl und R²² = 5-Cl ist (S3-4) und
R²¹ = iso-Propyl und R²² = H ist (S3-5 = 4-iso-propylaminocarbonyl-N-(2-methoxybenzoyl)benzolsulfonamid);

e) Verbindungen vom Typ der N-Acylsulfamoylphenylharnstoffe der Formel (S-VIII), die z.B. bekannt sind aus der EP-A-365484, 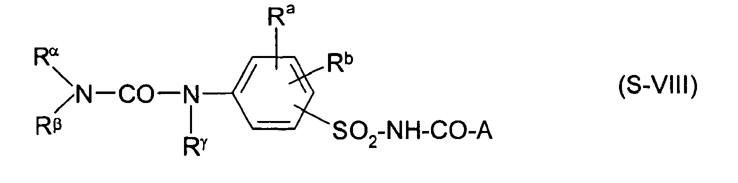
worin
- A: für einen Rest aus der Gruppe 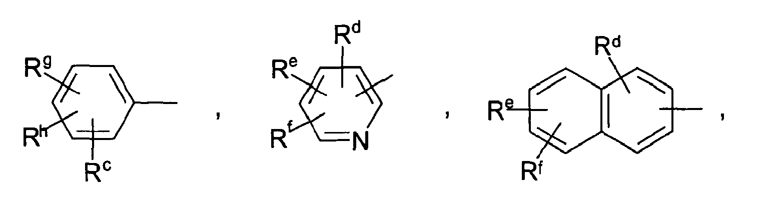 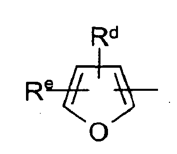 oder 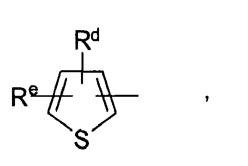
- R^{α} und R^{β}: unabhängig voneinander für Wasserstoff, C₁-C₈-Alkyl, C₃-C₈-Cycloalkyl, C₃-C₆-Alkenyl, C₃-C₆-Alkinyl, 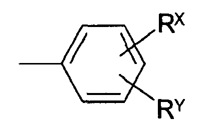 oder durch C₁-C₄-Alkoxy oder 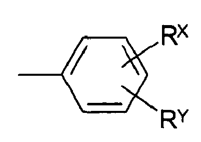 substituiertes C₁-C₄-Alkoxy, oder
- R^{α} und R^{β}: gemeinsam für eine C₄-C₆-Alkylenbrücke oder eine durch Sauerstoff, Schwefel, SO, SO₂, NH oder -N(C₁-C₄-Alkyl)- unterbrochene C₄-C₆-Alkylenbrücke,
- R^{γ}: für Wasserstoff oder C₁-C₄-Alkyl,
- R^{a} und R^{b}: unabhängig voneinander für Wasserstoff, Halogen, Cyan, Nitro, Trifluormethyl, C₁-C₄-Alkyl, C₁-C₄-Alkoxy, C₁-C₄-Alkylthio, C₁-C₄-Alkylsulfinyl, C₁-C₄-Alkylsulfonyl, -COOR^{j}, -CONR^{k}R^{m}, -CORⁿ, -SO₂NR^{k}R^{m} oder -OSO₂-C₁-C₄-Alkyl, oder R^{a} und R^{b} gemeinsam für eine C₃-C₄-Alkylenbrücke, die durch Halogen oder C₁-C₄-Alkyl substituiert sein kann, oder eine C₃-C₄-Alkenylenbrücke, die durch Halogen oder C₁-C₄-Alkyl substituiert sein kann, oder eine C₄-Alkadienylenbrücke, die durch Halogen oder C₁-C₄-Alkyl substituiert sein kann, und
- R^{g} und R^{h}: unabhängig voneinander für Wasserstoff, Halogen, C₁-C₄-Alkyl, Trifluormethyl, Methoxy, Methylthio oder -COOR^{j} stehen, wobei
- R^{c}: Wasserstoff, Halogen, C₁-C₄-Alkyl oder Methoxy,
- R^{d}: Wasserstoff, Halogen, Nitro, C₁-C₄-Alkyl, C₁-C₄-Alkoxy, C₁-C₄-Alkylthio, C₁-C₄-Alkylsulfinyl, C₁-C₄-Alkylsulfonyl, -COOR^{j} oder -CONR^{k}R^{m},
- R^{e}: Wasserstoff, Halogen, C₁-C₄-Alkyl, -COOR^{j}, Trifluormethyl oder Methoxy, oder R^{d} und R^{e} gemeinsam für eine C₃-C₄-Alkylenbrücke,
- R^{f}: Wasserstoff, Halogen oder C₁-C₄-Alkyl,
- R^{X} und R^{Y}: unabhängig voneinander Wasserstoff, Halogen, C₁-C₄-Alkyl, C₁-C₄-Alkoxy, C₁-C₄-Alkylthio, -COOR⁴, Trifluormethyl, Nitro oder Cyan,
- R^{j}, R^{k} und R^{m}: unabhängig voneinander Wasserstoff oder C₁-C₄-Alkyl,
- R^{k} und R^{m}: gemeinsam eine C₄-C₆-Alkylenbrücke oder eine durch Sauerstoff, NH oder -N(C₁-C₄-Alkyl)- unterbrochene C₄-C₆-Alkylenbrücke, und
- Rⁿ: C₁-C₄-Alkyl, Phenyl oder durch Halogen, C₁-C₄-Alkyl, Methoxy, Nitro oder Trifluormethyl substituiertes Phenyl bedeuten;
vorzugsweise Safener der Formel (S-VIII) sind
1-[4-(N-2-Methoxybenzoylsulfamoyl)phenyl]-3-methylharnstoff,
1-[4-(N-2-Methoxybenzoylsulfamoyl)phenyl]-3,3-dimethylharnstoff,
1-[4-(N-4,5-Dimethylbenzoylsulfamoyl)phenyl]-3-methylharnstoff,
1-[4-(N-Naphthoylsulfamoyl)phenyl]-3,3-dimethylharnstoff,
einschließlich der Stereoisomeren und der in der Landwirtschaft gebräuchlichen Salze.

Sofern es im Einzelnen nicht anders definiert wird, gelten für die Reste in den Formeln zu (S-II) bis (S-VIII) im Allgemeinen die folgenden Definitionen.
Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein.
Alkylreste, auch in den zusammengesetzten Bedeutungen wie Alkoxy, Haloalkyl usw. haben vorzugsweise 1 bis 4 C-Atome und, bedeuten z.B. Methyl, Ethyl, n- oder i-Propyl, n-, i-, t- oder 2-Butyl. Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B.

Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.
Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.
Halogen bedeutet Fluor, Chlor, Brom oder Iod. Haloalkyl, Haloalkenyl und Haloalkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₂CF₃, CH₂CHFCl, CCl₃, CHCl₂, CH₂CH₂Cl. Haloalkoxy ist z.B. OCF₃, OCHF₂, OCH₂F, OCF₂CF₃, OCH₂CF₃ und OCH₂CH₂Cl. Entsprechendes gilt für sonstige Halogen substituierte Reste.
Ein Kohlenwasserstoffrest kann ein aromatischer oder ein aliphatischer Kohlenwasserstoffrest sein, wobei ein aliphatischer Kohlenwasserstoffrest im allgemeinen ein geradkettiger oder verzweigter gesättigter oder ungesättigter Kohlenwasserstoffrest ist, vorzugsweise mit 1 bis 18, besonders bevorzugt 1 bis 12 C-Atomen, z.B. Alkyl, Alkenyl oder Alkinyl.
Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohlenwasserstoffoxyrest.
Aryl ist im allgemeinen ein mono-, bi- oder polycyclisches aromatisches System mit vorzugsweise 6-20 C-Atomen, bevorzugt 6 bis 14 C-Atomen, besonders bevorzugt 6 bis 10 C-Atomen, z.B. Phenyl, Naphthyl, Tetrahydronaphthyl, Indenyl, Indanyl, Pentalenyl und Fluorenyl, besonders bevorzugt Phenyl.
Heterocyclischer Ring, heterocyclischer Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält.
Bevorzugt sind gesättigte Heterocyclen mit 3 bis 7 Ringatomen und einem oder zwei Heteroatomen aus der Gruppe N, O und S, wobei die Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.
Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 bis 6 Ringatomen und einem Heteroatom aus der Gruppe N, O und S. Ganz besonders bevorzugte teilweise ungesättigte Heterocyclen sind Pyrazolin, Imidazolin und Isoxazolin.
Ebenso bevorzugt ist Heteroaryl, z.B. mono- oder bicyclische aromatische Heterocyclen mit 5 bis 6 Ringatomen, die ein bis vier Heteroatome aus der Gruppe N, O, S enthalten, wobei die Chalcogene nicht benachbart sind. Besonders bevorzugt sind monocyclische aromatische Heterocyclen mit 5 bis 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol. Ganz besonders bevorzugt sind Pyrazol, Thiazol, Triazol und Furan.
Substituierte Reste, wie substituierte Kohlenwasserstoffreste, z.B. substituiertes Alkyl, Alkenyl, Alkinyl, Aryl wie Phenyl und Arylalkyl wie Benzyl, oder substituiertes Heterocyclyl, bedeuten einen vom unsubstituierten Grundkörper abgeleiteten substituierten Rest, wobei die Substituenten vorzugsweise einen oder mehrere, vorzugsweise 1, 2 oder 3, im Falle von Cl und F auch bis zur maximal möglichen Anzahl, Substituenten aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Substituenten entsprechende ungesättigte aliphatische Substituenten, vorzugsweise Alkenyl, Alkinyl, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor oder Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.
Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-Arylamino sowie N-Heterocyclen. Dabei sind Alkylreste mit 1 bis 4 C-Atomen bevorzugt. Aryl ist dabei vorzugsweise Phenyl. Substituiertes Aryl ist dabei vorzugsweise substituiertes Phenyl. Für Acyl gilt dabei die weiter unten genannte Definition, vorzugsweise (C₁-C₄)Alkanoyl. Entsprechendes gilt für substituiertes Hydroxylamino oder Hydrazino.
Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)Alkyl, (C₁-C₄)Alkoxy, (C₁-C₄)Haloalkyl, (C₁-C₄)Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, mund p-Methoxyphenyl.
Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestern, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄-Alkyl)-carbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl oder N-Alkyl-1-iminoalkyl.
Von den Formeln (S-II) bis (S-VIII) umfasst sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Die Verbindungen der Formel (S-II) sind z.B. aus EP-A-0333131 (ZA-89/1960), EP-A-0269806 (US 4,891,057), EP-A-0346620 (AU-A-89/34951), EP-A-0174562, EP-A-0346620 (WO-A-91/08202), WO-A-91/07874 oder WO-A-95/07897 (ZA 94/7120) und der dort zitierten Literatur bekannt oder können nach oder analog den dort beschriebenen Verfahren hergestellt werden. Die Verbindungen der Formel (S-III) sind aus EP-A-0086750, EP-A-094349 (US 4,902,340), EP-A-0191736 (US 4,881,966) und EP-A-0492366 und dort zitierter Literatur bekannt oder können nach oder analog den dort beschriebenen Verfahren hergestellt werden. Einige Verbindungen sind ferner in EP-A-0582198 und WO-A-02/34048 beschrieben. Die Verbindungen der Formel (S-IV) sind aus zahlreichen Patentanmeldungen bekannt, beispielsweise US 4,021,224 und US 4,021,229. Verbindungen der Untergruppe b) sind weiterhin aus CN-A-87/102789, EP-A-365484 sowie aus "The Pesticide Manual", 11. bis 13. Auflage, British Crop Protection Council and the Royal Society of Chemistry (1997), bekannt. Die Verbindungen der Untergruppe c) sind in der WO-A-97/45016, die der Untergruppe d) in der WO-A-99/16744 (insbesondere in EP-A-365484) beschrieben. Die zitierten Schriften enthalten ausführliche Angaben zu Herstellungsverfahren und Ausgangsmaterialien und nennen bevorzugte Verbindungen. Auf diese Schriften wird ausdrücklich Bezug genommen, sie gelten durch Zitat als Bestandteil dieser Beschreibung.

Die Safener der vorstehenden Gruppen a) bis e) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der Herbizide erheblich erweitert werden und insbesondere ist durch die Verwendung von Safenern der Einsatz von Herbiziden, die bislang nur beschränkt oder mit nicht ausreichendem Erfolg eingesetzt werden konnten, d.h. von Kombinationen, die ohne Safener in niedrigen Dosierungen mit wenig Breitenwirkung zu nicht ausreichender Kontrolle der Schadpflanzen führten.

Besonders bevorzugt kommen sind als Safener in den erfindungsgemäßen Formulierungen unter anderem: 4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (Dicyclonon, BAS-145138), 4-Dichloracetyl-3,4-dihydro-3-methyl-2H-1,4-benzoxazin (Benoxacor), Cloquintocet, 5-Chlor-chinolin-8-oxy-essigsäure-(1-methyl-hexylester) (Cloquintocet-mexyl), α-(Cyanomethoxyimino)-phenylacetonitril (Cyometrinil), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methyl-phenyl)-N'-(1-methyl-1-phenyl-ethyl)-harnstoff (Dymron), 4,6-Dichlor-2-phenyl-pyrimidin (Fenclorim), 1-(2,4-Dichlor-phenyl)-5-trichlormethyl-1 H-1,2,4-triazol-3-carbonsäure-ethylester (Fenchlorazol-ethyl), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl), 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 1-(2-Chlor-phenyl)-5-phenyl-1 H-pyrazol-3-carbonsäure-methylester, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid und N-(2-Methoxy-benzoyl)-4-[(methylamino-carbonyl)-amino]-benzolsulfonamid.

Bei den in den erfindungsgemäßen Mikroemulsionskonzentraten enthaltenen Safenern sind ganz besonders bevorzugt Mefenpyr-diethyl, Cloquintocet-mexyl, Isoxadifen-ethyl, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid oder Fenchlorazol-ethyl; insbesondere ganz besonders bevorzugt sind Mefenpyr-diethyl, Cloquintocet-mexyl oder Isoxadifen-ethyl.

Eine besondere Ausführungsform der erfindungsgemäßen Mikroemulsionskonzentrate ist die gemeinsame Formulierung von Herbiziden und Safenern als agrochemischen Wirkstoffen.

Bei den in den erfindungsgemäßen Mikroemulsionskonzentraten enthaltenen Herbiziden-Safener-Mischungen sind bevorzugt Kombinationen der folgenden Verbindungen miteinander:
a) Verbindungen, die als ACCase-Inhibitoren wirksam sind, wie Alloxydim, Butroxydim, Clethodim, Clodinafop-propargyl, Cycloxydim, Cyhalofop-butyl, Diclofop-methyl, Fenoxaprop, Fenoxaprop-ethyl, Fenoxaprop-P, Fenoxaprop-P-ethyl, Fluazifop, Fluazifop-P-butyl, Fluazifop-butyl, Haloxyfop, Haloxyfop-P, Haloxyfop-etotyl, Haloxyfop-P-methyl, Metamifop, Profoxydim, Propaquizafop, Quizalofop-P-tefuryl, Quizalofop-P-ethyl, Sethoxydim, Tepraloxydim, Tralkoxydim und Isoxapyrifop,
b) Verbindungen, die als *p*-Hydroxyphenyl pyruvate dioxygenase (HPPD)-Inhibitoren wirksam sind, wie Benzobicyclon, Benzofenap, Isoxaflutole und dessen Diketonitrile, Mesotrione, Pyrazolynate, Pyrazoxyfen, Sulcotrione und Isoxachlortole,
c) Verbindungen verschiedener Wirkstoffgruppen, wie Atrazin, Acetochlor, Aclonifen, Alachlor, Amidochlor, Amidosulfuron, Azimsulfuron, Bentazon, Bensulfuron(-methyl), Bromoxynil(-octanoat/-heptanoat), Butachlor, Bispyribac, Chlorsulfuron, Chlorimuron, Clomazone, Clopyralid, Cinosulfuron, Cyclosulfamuron, 2,4-D-Ester, 2,4-DB-Ester, 2,4-DP-Ester, CMPP-Ester, MCPA-Ester, MCPB, EPTC, Desmedipham, Diflufenican, Dicamba, Ethoxysulfuron, Ethofumesat, Flazasulfuron, Florasulam, Flucarbazone, Flumetsulam, Flufenacet, Fluoroglykofen, Fluroxypyr, Flupyrsulfuron, Foramsulfuron, Flumioxazin, Flumiclorac, Fomesafen, Glufosinate, Glyphosate, Imazapyr, Imazosulfuron, lodosulfuron, lodosulfuron-methyl, loxynil(-octanoat), Lactofen, Halosulfuron, Imazamox, Imazapic, Imazapyr, Imazethapyr, Imazaquin, Metosulam, Mesosulfuron(-methyl), (S-)Metolachlor, Metsulfuron-methyl, Metamitron, Nicosulfuron, Oxyfluorfen, Pendimethalin, Phenmedipham, Picloram, Pinoxaden, Primisulfuron-methyl, Prosulfuron, Propanil, Propoxycarbazone, Pyrazosulfuron(-methyl), Rimsulfuron, Sulfentrazone, Sulfosulfuron, Sulfometuron, Terbuthylazin, Thifensulfuron, Triasulfuron, Tribenuron, Triclopyr, Triflusulfuron-methyl, Trifluralin, Tritosulfuron, Topramezone, Oxazinon, Oxadiargyl, Metribuzin, und deren Salze, z.B. die Natriumsalze.
d) Verbindungen, die als Safener wirksam sind, wie AD 67 (4-(dichloroacetyl)-1-oxa-4-azaspiro[4.5]decane), Benoxacor, CL 304,415 (4-carboxymethylchroman-4-carboxylic acid), Cloquintocet, Cloquintocet-mexyl, Cyprosulfamide, Dichlormid, Dicyclonon, DKA-24 (N1,N2-diallyl-N2-dichloroacetylglycinamide), Fenchlorazole, Fenchlorazole-ethyl, Fenclorim, Flurazole, Fluxofenim, Furilazole, Isoxadifen-ethyl, Mefenpyr-diethyl, MG 191 (2-dichloromethyl-2-methyl-1,3-dioxolane), Naphthalsäureanhydrid (naphthalene-1,8-dicarboxylic anhydride), Oxabetrinil and TI-35 (1-dichloroacetylazepane).

In einer weiteren Ausführungsform können z.B. verschiedene Herbizide miteinander kombiniert werden, z.B. Fenoxaprop-p-ethyl + loxynil-octanoat, Diclofop-methyl + Bromoxynil-octanoat, CMPP + Bromoxynil-octanoat, MCPA + loxynil-octanoat, Bromoxynil-octanoat + Bromoxynil-heptanoat, Bromoxynil-octanoat + Bromoxynil-heptanoat + MCPA, Bromoxynil-octanoat + Bromoxynil-heptanoat+ 2,4-D, Phenmedipham + Desmedipham, Phenmedipham + Desmedipham + Ethofumesate, Metamitron + Ethofumesate, Phenmedipham + Ethofumesate + Metamitron, Fenoxaprop-p-ethyl + lodosulfuron-methyl-natrium, Fenoxaprop-p-ethyl + Diclofop-methyl, Fenoxaprop-p-ethyl + lodosulfuron-methyl-natrium + Diclofop-methyl.

Als besonders bevorzugt sind die Kombinationen aus: Foramsulfuron + lodosulfuron-methyl-sodium + Isoxadifen-ethyl, lodosulfuron-methyl-sodium + Isoxadifen-ethyl, Foramsulfuron + Isoxadifen-ethyl, Fenoxaprop-P-ethyl + Ethoxysulfuron + Isoxadifen-ethyl, Ethoxysulfuron + Isoxadifen-ethyl, Fenoxaprop-P-ethyl + Isoxadifen-ethyl, lodosulfuron-methyl-sodium + Mesosulfuron-methyl + Mefenpyr-diethyl, Mesosulfuron-methyl + Mefenpyr-diethyl, lodosulfuron-methyl-sodium + Mefenpyr-diethyl, Fenoxaprop-P-ethyl + Mefenpyr-diethyl, Fenoxaprop-P-ethyl + Diclofop-methyl + Mefenpyr-diethyl, Diclofop-methyl + Mefenpyr-diethyl, Oiclofopmethyl + Sethoxydim + Mefenpyr-diethyl, Sethoxydim + Mefenpyr-diethyl, Fenoxaprop-P-ethyl + Isoproturon + Mefenpyr-diethyl, Isoproturon + Mefenpyr-diethyl, Clodinafop-propargyl + Cloquintocet-mexyl, Fenoxaprop-ethyl + Fenchlorazole-ethyl, Fenoxaprop-P-ethyl + Fenchlorazole-ethyl, Flucarbazone + Cyprosulfamide, Foramsulfuron + Cyprosulfamide, lodosulfuron(-methyl) + Cyprosulfamide, Metosulam + Cyprosulfamide, Metsulfuron(-methyl) + Cyprosulfamide, Nicosulfuron + Cyprosulfamide, Primisulfuron(.methyl) + Cyprosulfamide, Prosulfuron + Cyprosulfamide + Cyprosulfamide, Thifensulfuron + Cyprosulfamide, Tribenuron + Cyprosulfamide, Cloransulam-methyl + Cyprosulfamide, Chlorimuron + Cyprosulfamide, Ethoxysulfuron + Cyprosulfamide, Flazasulfuron + Cyprosulfamide, Florasulam + Cyprosulfamide, Flumetsulam + Cyprosulfamide, Halosulfuron + Cyprosulfamide, Imazamox + Cyprosulfamide, Imazapic + Cyprosulfamide, Imazapyr + Cyprosulfamide, Imazethapyr + Cyprosulfamide, Mesosulfuron + Cyprosulfamide, Propoxycarbazone + Cyprosulfamide, Sulfosulfuron + Cyprosulfamide, Amidosulfuron + Cyprosulfamide, Chlorsulfuron + Cyprosulfamide, Imazaquin + Cyprosulfamide, Triasulfuron + Cyprosulfamide, Sulfometuron + Cyprosulfamide, Cyclosulfamuron + Cyprosulfamide, Flupyrsulfuron + Cyprosulfamide, Pyrazosulfuron + Cyprosulfamide, Azimsulfuron + Cyprosulfamide, Bensulfuron + Cyprosulfamide, Bispyribac + Cyprosulfamide, Rimsulfuron + Cyprosulfamide, Tritosulfuron + Cyprosulfamide, Sulcotrione + Cyprosulfamide, Clomazone + Cyprosulfamide, Mesotrione + Cyprosulfamide, Topramezone + Cyprosulfamide, Metribuzin + Cyprosulfamide, Bentazon + Cyprosulfamide, Bromoxynil + Cyprosulfamide, Propanil + Cyprosulfamide, Atrazin + Cyprosulfamide, Terbuthylazin + Cyprosulfamide, EPTC + Cyprosulfamide, Tepraloxydim + Cyprosulfamide, Clethodim + Cyprosulfamide, Alloyxdim + Cyprosulfamide, Sethoxydim + Cyprosulfamide, Tralkoxydim + Cyprosulfamide, Clodinafop-propargyl + Cyprosulfamide, Cyhalofop-butyl + Cyprosulfamide, Diclofop-methyl + Cyprosulfamide, Fenoxaprop-P-ethyl + Cyprosulfamide, Fluazifop-P-butyl + Cyprosulfamide, Haloxyfop-methyl + Cyprosulfamide, Haloxyfop-etotyl + Cyprosulfamide, Haloxyfop-R-methyl + Cyprosulfamide, Haloxyfop-ethoxyethyl + Cyprosulfamide, Propaquizafop + Cyprosulfamide, Quizalofop-P-tefuryl + Cyprosulfamide, Quizalofop-P-ethyl + Cyprosulfamide, Acetochlor + Cyprosulfamide, S-Metolachlor + Cyprosulfamide, Flumioxazin + Cyprosulfamide, Flumiclorac + Cyprosulfamide, Fomesafen + Cyprosulfamide, Sulfentrazone + Cyprosulfamide, Dicamba + Cyprosulfamide, MCPA + Cyprosulfamide, MCPB + Cyprosulfamide, 2,4-D + Cyprosulfamide, Clopyralid + Cyprosulfamide, Fluroxypyr + Cyprosulfamide, Picloram + Cyprosulfamide, Triclopyr + Cyprosulfamide, Glufosinate + Cyprosulfamide, Glyphosate + Cyprosulfamide und Pendimethalin + Cyprosulfamide.

Das Gewichtsverhältnis Safener : Herbizid kann innerhalb weiter Grenzen variieren und liegt vorzugsweise im Bereich von 1 : 100 bis 100 : 1, insbesondere von 1 : 100 bis 50 : 1, ganz besonders bevorzugt 1 : 10 bis 10 : 1. Die jeweils optimalen Mengen an Herbizid(en) und Safener(n) sind üblicherweise vom Typ des Herbizids und/oder vom verwendeten Safener sowie von der Art des zu behandelnden Pflanzenbestandes abhängig.

Als alkoholische Lösungsmittel mit mindestens 5 C-Atomen (Komponente b) eignen sich insbesondere aromatische und nichtaromatische Alkohole.

Aromatische Alkohole enthalten mindestens eine aromatische und/oder nicht heteroaromatische Gruppe und mindestens eine OH-Funktion. Bevorzugte aromatische Alkohole sind solche, die vom Benzol abgeleitet sind, insbesondere monofunktionelle vom Benzol abgeleitete Alkohole, z.B. solche der allgemeinen Formel (I) 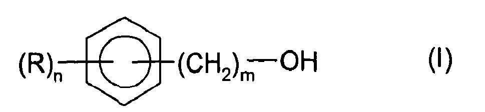 worin
- R: ein C₁-C₁₀-Alkylrest, z.B. Methyl, Ethyl, Propyl oder Butyl, oder H ist,
- n: eine ganze Zahl von 0 bis 5, vorzugsweise 0, 1 oder 2, besonders bevorzugt 0 ist,
- m: eine ganze Zahl von 0 bis 10, vorzugsweise von 0 bis 5 bedeutet,
insbesondere von 1 bis 5, speziell 1 oder 2.

Besonders bevorzugt als Komponente (b) sind Verbindungen der Formel (I), worin n = 0 und m eine ganze Zahl von 1 bis 5 ist, ganz besonders bevorzugt hier ist Benzylalkohol.

Bei nichtaromatischen Alkoholen handelt es sich um cyclische, aliphatische, gesättigte oder ungesättigte bzw. verzweigte oder unverzweigte Alkohole. Beispiele einwertiger Alkohole mit 5 bis 25 C- Atomen sind n-, i-, oder neo-Pentanol, n-, i-, s-Hexanol, n-, i-, s- Heptanol, n-, i-, s- Octanol, n-, i-, s- Decanol, n-, i-, s- Undecanol, n-, i-, s- Dodecanol, n-, i-, s- Tridecyclalkohol, z.B. Cyclohexanol. Beispiele mehrwertiger Alkohole sind Neopentylglykol. Geeignet sind auch Polygykole, kommerziell z.B. erhältlich als Exxal®-Reihe (ExxonMobil), Agrisynth® PA (ISP), Arcosolv®-Reihe (Lyondell Chemical) oder Nacol® 6-98 (DEA).

Bevorzugt sind Alkohole mit mindestens 5 C-Atomen, besonders bevorzugt Alkohole mit 5 bis 25 C-Atomen, ganz besonders bevorzugt Alkohole mit 6 bis 20 C-Atomen. Bei den Alkoholen kann es sich um primäre, sekundäre oder tertiäre Alkohole handeln. Insbesondere bevorzugt als alkoholische Lösungsmittel (Komponente b) sind Benzylalkohol, n-, i-, s- Hexanol, n-, i-, s- Heptanol und n-, i-, s- Octanol.

Als nicht-alkoholische Lösungsmittel (Komponente c) eignen sich beispielsweise Kohlenwasserstoffe oder polare Lösungsmittel wie Carbonsäurederivate, Phosphorsäureester, Ether, Ketone oder Sulfoxide wie Dimethylsulfoxid, wobei Wasser höchstens als Verunreinigung eines Inerts in Gehalten von maximal ≤ 2 Gew.-%, insbesondere ≤ 1 Gew.-%, auftreten kann.

Beispiele für Kohlenwasserstoffe (siehe z.B. Römpp Lexikon Chemie, 10. Auflage, Band 3, Seite 2202 (1997), Georg Thieme Verlag Stuttgart / New York) sind bevorzugt solche, die bei Normalbedingungen flüssig sind. Die Kohlenwasserstoffe können acyclische (aliphatische) Kohlenwasserstoffe sein, oder cyclische Kohlenwasserstoffe, z.B. aromatische, alicyclische (cycloaliphatische) oder heterocyclische Kohlenwasserstoffe.

Beispiele für Kohlenwasserstoffe als Komponente (c) sind:
1) aromatische Kohlenwasserstoffe, z.B.
   - ein- oder mehrfach alkyl-substituierte (z.B. ein-, zwei- oder dreifach (C₁-C₁₀)alkyl-substituierte) Aromaten, z.B. Benzole wie Toluol, Xylol, Mesitylen, Ethylbenzol, oder
   - Kohlenwasserstoffe mit kondensierten aromatischen Ringsystemen wie Naphthaline, z.B. 1-Methylnaphthalin, 2-Methylnaphthalin oder Dimethylnaphtalin, oder andere kondensierte aromatische Kohlenwasserstoffe wie Indan oder Tetralin,
2) cycloaliphatische Kohlenwasserstoffe, z.B. gesättigte oder ungesättigte, gegebenenfalls ein oder mehrfach alkyl-substituierte (z.B. ein-, zwei- oder dreifach (C₁-C₁₀)alkyl-substituierte) Cycloaliphaten wie Cycloalkane, Cycloalkene oder Cycloalkine, z.B. Cyclohexan oder Methylcyclopentan,
3) heterocyclische Kohlenwasserstoffe, z.B. Dioxan, Furan,
4) aliphatische Kohlenwasserstoffe, z.B. lineare oder verzweigte, gesättigte oder ungesättigte Aliphaten, bevorzugt C₅-C₁₆-Aliphaten, z.B. Alkane, Alkene oder Alkine, wie Pentan, Hexan, Octan, 2-Methylbutan oder 2,2,4-Trimethylpentan.

Es können auch Gemische eines oder mehrerer aromatischer Kohlenwasserstoffe und/oder eines oder mehrerer cycloaliphatischer Kohlenwasserstoffe und/oder eines oder mehrerer aliphatischer Kohlenwasserstoffe enthalten sein. Beispiele sind Gemische mehrerer aliphatischer Kohlenwasserstoffe, z.B. kommerziell erhältliche Lösungsmittel der Exxsol® D-Reihe, Isopar®-Reihe oder Bayol®-Reihe z.B. Bayol® 85 (Exxon Mobil Chemicals) oder der Isane® IP-Reihe oder Hydroseal® G-Reihe (Total Fina Elf), oder Gemische von aromatischen und aliphatischen Kohlenwasserstoffen, z.B. kommerziell erhältliche Lösungsmittel der Solvesso®-Reihe z.B. Solvesso® 100, Solvesso® 150, Solvesso® 200 oder Solvesso® 200 ND (Exxon Mobil Chemicals), der Solvarex®/Solvaro®-Reihe (Total Fina Elf) oder der Caromax®-Reihe z.B. Caromax® 28 (Petrochem Carless).

Beispiele für polare Lösungsmittel, sind aprotische, polare Lösungsmittel wie Carbonsäurederivate, z.B. die Vollether und Vollester von C₁-C₉-Alkansäuren, die mono-, di- oder polyfunktional sein können, z.B. die Ether und Ester mit C₁-C₂₀-Alkylalkoholen, wie Ketone, Phophorsäureester wie Tri(butoxyethyl)phosphat, Triethylphosphat, Amide, Nitrile oder Sulfone, z.B. Diisobutyladipat, Rhodiasolv® RPDE (Rhodia), Cyclohexanon, Jeffsol® PC (Huntsman), γ-Butyrolacton, N-Methylpyrrolidon, N-Octylpyrrolidon, Sulfoxide wie Dimethylsulfoxid, Acetonitril, Tributylphosphat oder Hostarex® PO-Reihe (Clariant), oder protische polare Lösungsmittel wie aliphatische und cycloaliphatische Alkohole, Amine oder Carbonsäuren. Die Alkohole, Amine oder Carbonsäuren, weisen bevorzugt 1 bis 18 C-Atome auf und können linear, verzweigt oder cyclisch, gesättigt oder ungesättigt sein, gegebenenfalls Heteroatome enthalten und ein- oder mehrfach funktionalisiert sein. Beispiele für Amine sind Diethylamin, Hexylamin oder Anilin. Beispiele für Carbonsäuren sind Monocarbonsäuren oder teilveresterte Di-oder Polycarbonsäuren, z.B. Adipinsäure und Adipinsäuremonoester.

Beispiele für Carbonsäurederivate sind z.B. die Vollester oder Amide von Carbonsäuren. Als Carbonsäurederivate kommen z.B. die Ester und Amide von Monocarbonsäuren, Dicarbonsäuren oder Polycarbonsäuren wie Tri-, Tetra- oder auch höherfunktionellen Carbonsäuren, vorzugsweise mit 2-26 C-Atomen in Frage.

Bevorzugte Carbonsäureester sind die Ester mit C₁-C₂₀-Alkoholen (z.B. Methanol, Ethanol, Propanol oder Butanol), insbesondere bei Fettsäureestern sind auch die Glycerin- und Glykolester bevorzugt. Als Carbonsäureester kommen auch innere Ester wie Lactone in Frage.

Beispiele für Monocarbonsäureester sind die Ester aliphatischer und aromatischer Monocarbonsäuren z.B. aliphatische C₁-C₉-Monocarbonsäureester wie Ameisensäureester, Essigsäureester und Propionsäureester, oder aliphatische Fettsäureester wie C₁₀-C₂₂-Fettsäureester, z.B. natürlichen Ursprungs wie sie in natürlichen Ölen oder Pflanzenölen enthalten sind, oder synthetischen Ursprungs, oder aromatische C₇-C₂₂-Monocarbonsäureester wie Benzoesäureester oder Phenylessigsäureester.

Beispiele für Fettsäureester sind, z.B. solche natürlichen Ursprungs, z.B. natürliche Öle wie tierische Öle oder Pflanzenöle, oder synthetischen Ursprungs, z.B. Edenor® MESU oder Agnique® ME-Reihe (Cognis), der Salim® ME-Reihe (Salim), der Stepan® C-Reihe (Stepan) oder der Witconol® 23-Reihe (Witco). Als Fettsäureester sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Fettsäureester wie C₁₀-C₂₂-Fettsäure-Ester sind Glycerin- und Glykolester von Fettsäuren wie C₁₀-C₂₂-Feftsäuren oder deren Umesterungsprodukte, z.B. Alkyl-Fettsäureester wie C₁-C₂₀-Alkyl-C₁₀-C₂₂-FettsäureEster, wie sie z.B. durch Umesterung der vorgenannten Glycerin- oder Glykol-Fettsäureester wie C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Bevorzugte Fettsäureester sind z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester wie Rapsölmethylester oder Rapsölethylester.

Beispiele für Dicarbonsäureester und Polycarbonsäureester sind die Vollester von Oxal-, Malon-, Bernstein-, Glutar-, Adipin-, Pimelin-, Sebacin-, Azelain-, Suberin-, Malein-, Phthal-, Terephthal-, Mellit-, Trimellit- und Polymaleinsäure, insbesondere die C₁-C₁₀-Alkylester wie die Methylester, Ethylester, Propylester wie n-Propylester oder iso-Propylester, Butylester wie n-Butylester, iso-Butylester, sec-Butylester oder tert-Butylester.

Als Carbonsäureamide kommen auch C₁-C₂₆-Carbonsäure-N,N-di(C₁-C₂₀-alkyl)amide z.B. C₁-C₂₆-Carbonsäure-N,N-dimethylamide wie N,N-Dimethylformamid oder N,N-Dimethylacetamid in Frage, oder innere Amide wie Lactame, z.B. Pyrrolidone wie N-substituierte C₁-C₁₂-Alkyl-pyrrolidone wie N-methyl-pyrrolidon, N-butyl-pyrrolidon, N-octyl-pyrrolidon, N-dodecyl-pyrrolidon und N-cyclohexyl-pyrrolidon.

Als Phosphorsäureester kommen beispielsweise Triester der Phosphorsäure mit Alkoholen in Frage, wobei die Alkohole bevorzugt ausgewählt sind aus der Gruppe bestehend aus,
1) einwertige Alkanole mit 1 bis 22 C-Atomen, z.B. n-, i- oder neo-Pentanol, n-Hexanol, n-Octanol, 2-Ethylhexanol,
2) Diole oder Polyole, wie Ethylenglykol, Propylenglykol oder Glycerin,
3) Aryl-, Alkylaryl-, Poly(alkyl)aryl- und Poly(arylalkyl)arylalkohole, beispielsweise Phenol und/oder Kresol, Octylphenol, Nonylphenol, Triisobutylphenol, Tristyrylphenol,
4) alkoxylierte Alkohole, die durch Umsetzung der vorstehend unter 1), 2) oder 3) genannten Alkohole mit Alkylenoxiden, vorzugsweise (C₁-C₄)Alkylenoxiden erhalten werden.

Bevorzugte Phosphorsäureester sind Triester der ortho-Phosphorsäure, insbesondere alkoxylierte Triester der ortho-Phosphorsäure wie Tri(butyoxyethyl)phosphat.

Als Ketone kommen beispielsweise aromatische, cycloaliphatische oder aliphatische Ketone in Frage wie Acetophenon, Benzophenon, Isophoron, Cyclohexanon und Methylethylketon, Ethylbutylketon, Diethylketon, Dibutylketon.

Als Ether kommen beispielsweise aromatische, cycloaliphatische oder aliphatische Ether in Frage wie Anisol, Tetrahydrofuron, Oxiran, Dibutylether, Dipentylether, Butylhexylether, Methyl-tert.Butylether.

Bevorzugte nicht-alkoholische Lösungsmittel (Komponente c) sind aromatische Kohlenwasserstoffe wie, C₁-C₆-Alkyl-benzole z.B. Toluol oder Xylol, C₁-C₆-Alkylnaphthaline und Aromatengemische wie die Solvesso®-Reihe von Exxon, Ketone wie Acetophenon, Isophoron, Cyclohexanon und Methylethylketon, N-substituierte C₁-C₁₂-Alkyl-pyrrolidone wie N-methyl-pyrrolidon, N-butyl-pyrrolidon, N-octyl-pyrrolidon, N-dodecyl-pyrrolidon und N-cyclohexyl-pyrrolidon, cyclische aliphatische Kohlenwasserstoffe wie Decalin und Cyclohexan, Säureamide wie Dimethylformamid, Dimethylsulfoxid, Lactone wie Gamma-Butyrolacton, Di- oder Polycarbonsäureester wie C₁-C₁₂-Alkyl-Phthalsäureester, Adipinsäureester z.B. Diisopropyladipat, Dimethyladipat und Diisobutyladipat, Phosphorsäureester wie Trialkenyl-phosphate, z.B. Tri(butoxyethyl)phosphat oder Triethylphosphat, sowie Fettsäureester. Besonders bevorzugte nicht-alkoholische Lösungsmittel (Komponente c) sind aromatische Lösemittel, wie Solvesso® 100, Solvesso® 150, Solvesso® 200 oder Solvesso® 200 ND, Xylol, Triethylphosphat, Rapsölmethylester (z.B. Edenor® MESU oder Agnique® ME-Reihe) oder Rapsölethylester, N-Octylpyrrolidon sowie N-Methylpyrrolidon.

Als anionische Tenside (Komponente d) eignen sich beispielsweise Sulfate, Sulfonate, Sulfosuccinate, Phosphate und Phosphonate von Kohlenwasserstoffen, die optional Alkylenoxideinheiten enthalten können. Die Sulfate, Sulfonate, Phosphate und Phosphonate können in Form der Säuren oder als Salze vorliegen. Bevorzugt sind anionische Tenside (d) der nachfolgenden Formel (II):

R-Q (II)

worin
- Q: - O - SO₃ M, - SO₃ M, - O - PO₃H M oder PO₃H M ist, worin M gleich H oder ein Kation ist, insbesondere ein Metallkation wie ein Alkalimetallion oder Erdalkalimetallion, oder ein Ammoniumion,
- R: ein unsubstituierter oder substituierter C₁-C₃₀-Kohlenwasserstoffrest wie ein C₁-C₂₀-Alkylrest oder C₆-C₂₄-Arylrest ist, der optional über Alkylenoxideinheiten gebunden sein kann, oder R ist eine Alkylenoxideinheit.

Unter dem Begriff Alkylenoxideinheiten werden insbesondere Einheiten von C₂-C₁₀-Alkylenoxiden, wie Ethylenoxid, Propylenoxid oder Butylenoxid verstanden, wobei die Einheiten innerhalb des Tensids gleich oder voneinander verschieden und dabei statistisch gemischt oder blockweise angeordnet sein können.

Bevorzugt ist R ein C₁-C₂₀-Alkylrest (z.B. Methyl, Ethyl, Propyl, Butyl) oder ein C₆-C₂₄-Arylrest (z.B. Phenyl, Biphenyl, Naphthyl), der optional einen oder mehrere Reste wie C₁-C₂₀-Kohlenwasserstoffreste tragen kann, z.B. aus der Gruppe C₁-C₂₀-Alkyl (z.B. lineares oder verzweigtes C₁-C₂₀-Alkyl wie sec. Butyl oder Dodecyl), welches einen oder mehrere Reste wie C₆-C₂₀-Arylreste (z.B. Phenyl, Biphenyl, Naphthyl) tragen kann, und C₆-C₂₀-Aryl (z.B. Phenyl, Biphenyl oder Naphthyl), welches optional einen oder mehrere Reste tragen kann wie C₁-C₁₀-Alkyl (z.B. Methyl, Ethyl, Propyl, Butyl), oder
R ist ein Rest R²O-(AO)_{w}, worin w eine ganze Zahl von 1 bis 100, vorzugsweise 2 bis 50, insbesondere 2 bis 10, ist, und AO eine Alkylenoxideinheit ist, z.B. (EO)ₓ(PO)_{Y}(BO)_{Z}, worin EO eine Ethylenoxideinheit, PO eine Propylenoxideinheit, BO eine Butylenoxideinheit, x eine ganze Zahl von 0 - 100, y eine ganze Zahl von 0 - 100, z eine ganze Zahl von 0 bis 100 und die Summe x + y + z mindestens 1 ist, und die Alkylenoxideinheit, z.B. (EO)_{X}(PO)_{Y}(BO)_{Z}, statistisch gemischt oder blockweise aufgebaut sein kann, und
R² ist H, ein C₁-C₂₀-Alkylrest (z.B. Methyl, Ethyl, Propyl, Butyl) oder ein C₆-C₂₄-Arylrest (z.B. Phenyl, Biphenyl, Naphthyl), der optional einen oder mehrere Reste wie C₁-C₂₀-Kohlenwasserstoffreste tragen kann, z.B. aus der Gruppe C₁-C₂₀-Alkyl (z.B. lineares oder verzweigtes C₁-C₂₀-Alkyl wie sec. Butyl oder Dodecyl), welches einen oder mehrere Reste wie C₁-C₂₀-Kohlenwasserstoffreste wie C₆-C₂₀-Arylreste (z.B. Phenyl, Biphenyl, Naphthyl) tragen kann, und C₆-C₂₀-Aryl (z.B. Phenyl, Biphenyl, Naphthyl), welches optional einen oder mehrere Reste tragen kann wie C₁-C₁₀-Alkyl (z.B. Methyl, Ethyl, Propyl, Butyl), oder R² ist - O - SO₃ M, - SO₃ M, - O - PO₃H M, H oder PO₃H M, vorzugsweise PO₃H M, worin M gleich H oder ein Kation, insbesondere ein Metallkation wie ein Alkalimetallion oder Erdalkalimetallion, oder ein Ammoniumion ist.

Besonders bevorzugte anionische Tenside (d) sind Dialkyl-Sulfosuccinate wie z.B. Di-(2-Ethylhexyl)Sulfosuccinat-Natrium (z.B. Triton® GR 7 ME von Union Carbide), Alkylarylsulfonate wie Dodecylbenzolsulfonate, z.B. Erdalkalidodecylbenzolsulfonate wie Calcium-dodecylbenzolsulfonate (z.B. z.B. Phenylsulfonat® Ca 100, synonym Calsogen® AR 100 ND, Phenylsulfonat® Ca 70 von Clariant), Alkylarylpolyglykolethersulfate und -sulfonate, insbesondere Arylalkylarylpolyglykolethersulfate wie Tristyrylphenolpolyglykolethersulfate, insbesondere die Alkali- oder Ammonium- oder Triethanolaminsalze (z.B.
Soprophor®-Reihe von Rhodia), Alkylethersulfate und deren Salze (z.B. wie Genapol® LRO von Clariant), Alkylsulfate und Alkylsulfonate (z.B. wie die Hostapur® Reihe von Clariant), Alkylpolyglykoletherphosphate, insbesondere die Alkalisalze (z.B. die Rhodafac®-Reihe Rhodia), Alkylarylpolyglykoletherphosphate und-phosphonate, insbesondere in Form der Alkalimetallsalze. Die Salze sind im allgemeinen bevorzugt Metallsalze wie Alkali- oder Erdalkalimetallsalze oder Ammonium- oder Trialkylaminsalze.

Als nichtionische Tenside (Komponente e) eignen sich beispielsweise Alkoxylate, z.B. Ethoxylate, Propoxylate oder Butoxylate und deren Kombinationen. Unter dem Begriff Alkoxylate werden Verbindungen verstanden, die Alkylenoxideinheiten enthalten, insbesondere Einheiten von C₂-C₁₀-Alkylenoxiden, wie Ethylenoxid, Propylenoxid oder Butylenoxid, wobei die Einheiten innerhalb des Tensids gleich oder voneinander verschieden und dabei statistisch gemischt oder blockweise angeordnet sein können. Beispiele für Alkoxylate als Komponente (e) sind Verbindungen der nachfolgenden Formel (lll):

R¹-(AO)_{w}-R² (III)

,
worin
R¹ ausgewählt ist aus der Gruppe H, HO, C₁-C₃₀-Alkyl, welches linear oder verzweigt sein kann, (z.B. Methyl, Ethyl, Propyl, Butyl, Pentyl, Hexyl), C₁-C₃₀-Alkoxy, vorzugsweise C₁-C₁₀-Alkoxy, welches linear oder verzweigt sein kann (z.B. Methoxy, Ethoxy, Propoxy, Butoxy, Pentoxy, Hexoxy), C₆-C₂₄-Aryl (z.B. Phenyl), welches optional einen oder mehrere Reste tragen kann wie C₁-C₃₀-Arylalkyl (z.B. Styrylphenyl) oder C₁-C₃₀-Alkyl, worin die Alkylgruppen linear oder verzweigt sein können (z.B. Butyl oder Dodecyl), C₆-C₂₄-Aryloxy (z.B. Phenoxy), welches optional einen oder mehrere Reste tragen kann wie C₁-C₃₀-Arylalkyl (z.B. Styrylphenyl), oder C₁-C₃₀-Alkyl, worin die Alkylgruppen linear oder verzweigt sein können (z.B. Butyl oder Dodecyl), oder
R¹ ist ein Sorbitanesterrest, ein Glycerinesterrest, oder C₁-C₃₀-Alkyl-NR⁴, vorzugsweise C₁₀-C₂₀-Alkyl-NR⁴, worin die C₁-C₂₀-Alkylgruppe linear oder verzweigt sein kann (z.B. Dodecyl, Hexadecyl, Octadecyl) und worin R⁴ gleich H oder C₁-C₁₀-Alkyl ist (z.B. Methyl, Ethyl, Propyl, Butyl),
R² gleich H oder C₁-C₆-Alkyl, welches linear oder verzweigt sein kann (z.B. Methyl, Ethyl, Propyl, Butyl, Pentyl oder Hexyl) ist, und
w ist eine ganze Zahl von 1 bis 100, vorzugsweise 4 bis 80, insbesondere 6 bis 50, AO ist eine Alkylenoxideinheit, z.B. (EO)_{X}(PO)_{Y}(BO)_{Z}, worin EO eine Ethylenoxideinheit, PO eine Propylenoxideinheit, BO eine Butylenoxideinheit, x eine ganze Zahl von 0 - 100, y eine ganze Zahl von 0 - 100, z eine ganze Zahl von 0 bis 100 und die Summe x + y + z mindestens 1 ist, und die Alkylenoxideinheit, z.B. (EO)_{X}(PO)_{Y}(BO)_{Z}, statistisch gemischt oder blockweise aufgebaut ist.

Besonders bevorzugte nichtionische Tenside (e) sind Alkylarylpolyalkoxylate, z.B. die Ethoxylate, Propoxylate und/oder Butoxylate, Arylalkylarylpolyalkoxylate wie Tristyrylphenylpolyalkoxylate (z.B. Soprophor® Reihe von Rhodia) und Alkylphenylpolyalkoxylate wie Tributylphenylpolyalkoxlate (z.B. Sapogenat® Reihe von Clariant), Alkylenoxid-Blockcopolymere wie Ethylenoxid(EO)-Propylenoxid(PO)-Blockcopolymere (z.B. Emulsogen® 3510, Emulsogen® V 1816, Genapol® PF 10, Genapol® PF 20, Genapol® PF 40 von Clariant, Berol® 992 von Akzo Nobel) oder Ethylenoxid(EO)-Butylenoxid(BO)-Blockcopolymere (z.B. Pluronic® Reihe von BASF), Polyalkylenoxide wie Polyethyenoxide, Polypropylenoxide oder Polybutylenoxide, die an einem der beiden endständigen Sauerstoffatome mit C₁-C₂₂-Kohlenwasserstoffresten, vorzugsweise C₁₀-C₂₂-Kohlenwasserstoffresten wie geradkettigen oder verzweigten C₁₀-C₂₂-Alkylresten (z.B. Decyl, Dodecyl, Tetradecyl, Hexadecyl) substituiert sein können, z.B. Polyglykolether, die isotridecylsubstituiert sein können (z.B. Genapol® X-060, Genapol® X-080, Genapol® X-150 und andere aus den Genapol®-Reihen von Clariant), alkoxylierte wie ethoxylierte Öle wie Pflanzenöle, z.B. alkoxyliertes wie ethoxyliertes Rhizinusöl (Emulsogen® Reihe Clariant), epoxidiertes Sojabohnenöl (z.B. Edenol® D-81, synonym Agnique® ESO 81 G von Cognis), alkoxylierte wie ethoxylierte (C₁₀-C₂₂)-Fettamine (z.B. Genamin®Reihe, z.B. Genamin® S080 von Clariant).

Soweit in dieser Beschreibung kohlenstoffhaltige Reste genannt werden wie Alkyl, Alkoxy, Haloalkyl, Haloalkoxy, Alkylamino und Alkylthio sowie die entsprechenden ungesättigten und/oder substituierten Reste, können diese im Kohlenstoffgerüst jeweils geradkettig oder verzweigt sein. Wenn nicht speziell angegeben, weisen diese Reste im allgemeinen 1 bis 30 C-Atome auf, wobei die niederen Kohlenstoffgerüste, z.B. mit 1 bis 6 C-Atomen bzw. bei ungesättigten Gruppen mit 2 bis 6 C-Atomen, bevorzugt sind. Alkylreste, auch in den zusammengesetzten Bedeutungen wie Alkoxy, Haloalkyl usw., bedeuten z.B. Methyl, Ethyl, n- oder i-Propyl, n-, i-, t- oder sec-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Alkenyl in der Form (C₃-C₄)Alkenyl, (C₃-C₅)Alkenyl, (C₃-C₆)Alkenyl, (C₃-C₈)Alkenyl oder (C₃-C₁₂)-Alkenyl bedeutet vorzugsweise einen Alkenylrest mit 3 bis 4, 3 bis 5, 3 bis 6, 3 bis 8 bzw. 3 bis 12 C-Atomen, bei dem die Doppelbindung nicht an dem C-Atom liegt, das mit dem übrigen Molekülteil der Verbindung verbunden ist ("yl"-Position). Entsprechendes gilt für (C₃-C₄)Alkinyl etc., (C₃-C₄)Alkenyloxy etc. und (C₃-C₄)Alkinyloxy etc.

Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.

Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Dioxolanyl, Morpholinyl, Tetrahydrofuryl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Halogen bedeutet beispielsweise Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Kohlenwasserstoffreste, z.B. Alkyl, Alkenyl, Alkinyl, Aryl, Phenyl und Benzyl, oder Heterocyclyl oder Heteroaryl, können substituiert sein, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Ein Acylrest bedeutet den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.

Ein Acylrest ist bevorzugt Formyl oder aliphatisches Acyl aus der Gruppe CO-R^{x}, CS-R^{x}, CO-OR^{x}, CS-OR^{x}, CS-SR^{x}, SOR^{Y} oder SO₂R^{Y}, wobei R^{x} und R^{Y} jeweils einen C₁-C₃₀-Kohlenwasserstoffrest bedeutet, der unsubstituiert oder substituiert ist, oder Aminocarbonyl oder Aminosulfonyl, wobei die beiden letztgenannten Reste unsubstituiert, N-monosubstituiert oder N,N-disubstituiert sind.
Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl, N-Alkyl-1-iminoalkyl und andere Reste von organischen Säuren.

Von Formel (I), (II), (III) und den anderen in dieser Beschreibung genannten Verbindungen sind auch alle Stereoisomeren und deren Gemische umfasst. Solche Verbindungen der enthalten ein oder mehrere asymmetrische C-Atome oder auch Doppelbindungen, die in der allgemeinen Formel nicht gesondert angegeben sind. Die durch ihre spezifische Raumform definierten möglichen Stereoisomeren, wie Enantiomere, Diastereomere, Z- und E-Isomere sind alle von den jeweiligen Formeln umfaßt und können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Die Herstellung der erfindungsgemäßen Mikroemulsionskonzentrate kann durch übliche Verfahren erfolgen, z.B. Mischen durch Lösen oder Emulgieren der Einzelkomponenten, bevorzugt bei Raumtemperatur. Sofern weitere Hilfs- und Zusatzstoffe enthalten sind, werden diese ebenfalls bevorzugt bei Raumtemperatur eingetragen. Die Zugabereihenfolge der Einzelkomponenten ist dabei im allgemeinen beliebig.

Die Herstellprozesse sind im Prinzip bekannt und beispielsweise beschrieben in Winnacker-Küchler, "Chemische Technologie", Band 7, C. Hanser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London; H. Mollet, A. Grubenmann, "Formulierungstechnik", Wiley-VCH, Weinheim 2000.

Die Formulierungshilfsstoffe wie Inertmaterialien und weitere Zusatzstoffe sind ebenfalls bekannt und werden beispielsweise beschrieben in: "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hanser Verlag München, 4. Aufl. 1986.

Auf der Basis dieser Formulierungen lassen sich auch Kombinationen mit von Komponenten (a) und (b) verschiedenen agrochemischen Wirkstoffen, wie Fungiziden, Insektiziden und/oder Wachstumsregulatoren herstellen, z.B. in Form einer Fertigformulierung oder als Tankmischung.

Die erfindungsgemäßen Mikroemulsionskonzentrate lassen sich mit Wasser zu Mikroemulsionen verdünnen, die ebenfalls Gegenstand der vorliegenden Erfindung sind. Dabei kann das Gewichtsverhältnis Mikroemulsionskonzentrat : Wasser beispielsweise 1:0,00001 bis 0,1:1000, vorzugsweise 1:0,0001 bis 0,1:100 betragen, was zu konzentrierten Mikroemulsionen führt, die als solche lagerstabil sind. Diese können für Applikationszwecke mit Wasser weiter zu Spritzbrühen verdünnt werden, die im allgemeinen in Form von Emulsionen wie Mikroemulsionen, wässrigen Lösungen, Suspensionen oder Suspoemulsionen vorliegen.

Die Komponenten (a), (b), (c), (d), (e) und optional (f) der erfindungsgemäßen Mikroemulsionskonzentrate und Mikroemulsionen können zusammen in einer Fertigformulierung enthalten sein, die dann in üblicher Weise, z.B. in Form einer Spritzbrühe appliziert werden kann.

Die erfindungsgemäßen Mikroemulsionskonzentrate einschließlich der daraus erhältlichen Spritzbrühen (nachstehend gemeinsam als erfindungsgemäße agrochemische Mittel bezeichnet) können neben den Komponenten (a), (b), (c), (d) und (e) als weitere Komponente verschiedene Formulierungshilfsmittel (Komponente f) enthalten, z.B. übliche Hilfs- und Zusatzstoffe, wie Anti-Driftagentien, Stoffe zur Beeinflussung der Feuchtigkeit (Humectants), Dünger wie Ammoniumsulfat, Harnstoff oder Mehrkomponenten-Dünger z.B. auf Phosphor-, Kalium- und Stickstoffbasis wie P,K,N-Dünger, oder handelsübliche von Komponenten (d) und (e) verschiedene Tenside wie betainische oder polymere Tenside, Stabilisatoren wie pH-Stabilisatoren, Biocide, UV-Stabilisatoren, Entschäumer, synthetische oder natürliche Polymere. Diese agrochemischen Mittel sowie deren Herstellung und Anwendung sind ebenfalls neu und Gegenstand dieser Erfindung.

Bevorzugte Beispiele für übliche Hilfs- und Zusatzstoffe (f) sind
- Netzmittel wie Genapol® LRO (0-35 Gew.-%), Dispergiermittel wie Tamol® (0-15 Gew.-%) oder weitere Tenside (z.B. kationische oder polymere Tenside) (0-30 Gew.-%);
- Anorganische Salze wie NaCl, Na₂SO₄, MgCl₂ (0-50 Gew.-%), (oligo-; poly-)-Phosphate; Carbonate wie Kaliumcarbonat;
- Dünger wie Ammoniumsulfat, Ammoniumnitrat, Harnstoff, Phosphor- und Kaliumhaltige Komponenten, gegebenenfalls weitere Spurenelemente (0-60 Gew.-%);
- Entschäumer wie Fluowet® PP (0-2 Gew.-%) oder aus der Rhodorsil®-Reihe (z.B. Rhodorsil® 481);
- Bindemittel wie geeignete natürliche oder synthetische Stoffe wie Polyaminosäuren, Polyvinylalkohole, Polyvinylpyrrolidon, Polyacrylsäure-Derivate (0-15 Gew.-%);
- Kristallisationsinhibitoren (0-8 Gew.-%).

Der Einsatz der erfindungsgemäßen agrochemischen Mittel kann z.B. geschehen durch Applikation auf die Schadorganismen oder die Orte, an denen sie auftreten, z.B. durch Spritzung. Die erfindungsgemäßen agrochemischen Mittel werden in der Regel in Form einer Spritzbrühe ausgebracht, welche die Komponenten (a), (b), (c), (d) und (e) in wirksamen Mengen und gegebenenfalls übliche Hilfs- und Zusatzstoffe (f), z.B. für die Formulierung oder Anwendung enthält. Die Spritzbrühe wird im allgemeinen auf Basis von Wasser hergestellt, wobei übliche Hilfs- und Zusatzstoffe (f), z.B. Öle, wie Pflanzenöle oder hochsiedende Kohlenwasserstoffe wie Kerosin oder Paraffin zugesetzt werden können.

Bei der Applikation liegt die Konzentration an Wirkstoff (Komponente a) im allgemeinen bei 10⁻⁶ bis 10 Gew.-%, vorzugsweise bei 10⁻⁵ bis 4 Gew.-% in dem applizierten Mittel, z.B. der Spritzbrühe, bei einer Aufwandmenge von 1 bis 5000 I/ha, vorzugsweise 50 bis 1000 I/ha.

Zur Anwendung werden in handelsüblicher Form vorliegende konzentrierte Formulierungen gegebenenfalls in üblicher Weise verdünnt, z.B. mittels Wasser. Es kann vorteilhaft sein, den Spritzbrühen weitere Mengen an Komponenten (c), (d) und (e) und/oder andere zur Anwendung übliche Hilfs- und Zusatzstoffe (f), insbesondere selbstemulgierende Öle oder Paraffinöle zuzugeben. Auch können zusätzliche Komponenten (a) zugegeben werden oder andere von Komponenten (a) verschiedene agrochemische Wirkstoffe.

Bevorzugte Mischungen sind Verbindungen, die als ACCase-Inhibitoren oder als p-Hydroxyphenyl pyruvate dioxygenase (HPPD)-Inhibitoren wirksam sind, mit Verbindungen, die als Safener wirksam sind, wie oben ausgeführt, die dann als Fertigformulierung oder als Tankmischung für die Herstellung von Spritzbrühen eingesetzt werden können.

Mit den äußeren Bedingungen wie Temperatur, Feuchtigkeit, Art des verwendeten Herbizids, kann die erforderliche Aufwandmenge der agrochemischen Wirkstoffe (Komponente a) variieren. Sie kann innerhalb weiter Grenzen schwanken, z.B. zwischen 0,001 und 10 kg/ha oder mehr Aktivsubstanz, vorzugsweise liegt sie zwischen 0,005 und 5 kg/ha.

Sind die erfindungsgemäßen agrochemischen Mittel bevorzugt herbizide Mittel, weisen diese eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Leptochloa spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den herbizide Mitteln verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Die Anwendung der erfindungsgemäßen herbiziden Mittel kann auch in wirtschaftlich bedeutenden transgenen Kulturen von Nutz- und Zierpflanzen erfolgen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man das erfindungsgemäße herbizide Mittel auf die Schadpflanzen, Pflanzenteile, Pflanzensamen oder die Fläche auf der die Pflanzen wachsen, z.B. die Anbaufläche appliziert, z.B. im Vorauflauf, Nachauflauf oder im Vor- und Nachauflauf, vorzugsweise im Vorauflauf.

Die Pflanzenkulturen können auch gentechnisch verändert oder durch Mutationsselektion erhalten sein und sind bevorzugt tolerant gegenüber Acetolactatsynthase (ALS)-Inhibitoren.

Gegenstand der Erfindung ist auch die Verwendung der erfindungsgemäßen herbiziden Mittel zur Bekämpfung von Schadpflanzen, vorzugsweise in Pflanzenkulturen. Eine bevorzugte Verwendung betrifft den Einsatz von herbiziden Mitteln, die synergistische Mengen an Komponenten (a), (b), (c), (d), (e) und gegebenenfalls (f) enthalten.

Die erfindungsgemäßen herbiziden Mittel können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen.

Die erfindungsgemäßen agrochemischen Mittel, insbesondere herbiziden Mittel, können gegebenenfalls als Mischformulierungen mit weiteren agrochemischen Wirkstoffen (z.B. weitere Herbizide und Safener, Insektizide, Fungizide, Wachstumsregulatoren) und üblichen Hilfs- und Zusatzstoffen (f) vorliegen, die dann in üblicher Weise mit Wasser verdünnt zur Anwendung gebracht werden, oder als so genannte Tankmischungen durch gemeinsame Verdünnung der getrennt formulierten oder partiell getrennt formulierten Komponenten mit Wasser hergestellt werden.

Aufgrund der relativ geringen Aufwandmenge der erfindungsgemäßen herbiziden Mittel ist deren Verträglichkeit im allgemeinen sehr gut. Insbesondere wird durch die erfindungsgemäßen Kombinationen eine Senkung der absoluten Aufwandmenge erreicht, verglichen mit der Einzelanwendung eines herbiziden Wirkstoffs.

Gegenstand der Erfindung ist deshalb auch ein Verfahren zur selektiven Bekämpfung von Schadpflanzen in Pflanzenkulturen, dadurch gekennzeichnet, dass man eine herbizid wirksame Menge an Herbiziden (a), allein oder zusammen mit Safenern, in Kombination mit den Komponenten (c), (d) und (e) appliziert, gegebenenfalls in Kombination mit Komponente (f), z.B. im Vorauflauf, Nachauflauf oder im Vor- und Nachauflauf, vorzugsweise im Vorauflauf, auf die Pflanzen, Pflanzenteile, Pflanzensamen oder den Ort bzw. die Fläche auf der die Pflanzen wachsen, z.B. die Anbaufläche.

In bevorzugter Verfahrensvariante werden die Herbizide (a) in Feld-Aufwandmengen von 0,1 bis 2000 g Aktivsubstanz/ha, bevorzugt von 0,5 bis 1000 g Aktivsubstanz/ha, ausgebracht. Die benötigten Aufwandmengen der Safener (a) im Feld können je nach Indikation und verwendetem Herbizid innerhalb weiter Grenzen schwanken und liegen in der Regel im Bereich von 0,001 bis 1 kg, vorzugsweise 0,005 bis 0,2 kg Aktivsubstanz/ha.

Weiterhin besonders bevorzugt ist die Ausbringung der Wirkstoffe in Form einer Co-Formulierung oder in Form von Tankmischungen, wobei die Einzelkomponenten, z.B. in Form von Formulierungen, gemeinsam im Tank mit Wasser gemischt werden und die erhaltene Spritzbrühe ausgebracht wird.

Da die Kulturpflanzenverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel mit den erfindungsgemäßen Wirkstoffkombinationen daher zur selektiven Bekämpfung unerwünschter Pflanzen eingesetzt.

Die Ausbringung der erfindungsgemäßen herbiziden Mittel kann in üblicher Weise erfolgen, zum Beispiel mit Wasser als Träger in Spritzbrühmengen von etwa 5 bis 4000 Liter/ha. Eine Anwendung der Mittel im sog. Low-Volume- und Ultra-Low-Volume-Verfahren (ULV) ist ebenso möglich.

Daneben können in den herbiziden Mitteln der Erfindung zur Abrundung der Eigenschaften, meist in untergeordneten Mengen, zusätzlich ein, zwei oder mehrere von Komponenten (a) verschiedene agrochemische Wirkstoffe aus anderen Bereichen (z.B. Insektizide, Fungizide, Wachstumsregulatoren) enthalten sein.

Damit ergeben sich zahlreiche Möglichkeiten mehrere agrochemische Wirkstoffe miteinander zu kombinieren und gemeinsam zur Bekämpfung von Schadorganismen, wie Schadpflanzen in Pflanzenkulturen einzusetzen, ohne vom Gedanken der Erfindung abzuweichen.

Die erfindungsgemäßen Mikroemulsionskonzentrate und Mikroemulsionen zeigen eine verbesserte chemische und physikalische Stabilität sowie ein vorteilhaftes physikalisches Applikationsverhalten. Die agrochemischen Wirkstoffe der Komponenten (a), sowie gegebenenfalls weitere zugesetzte agrochemische Wirkstoffe, bleiben während der Applikation gleichmäßig im Spritztank verteilt, wodurch eine gleichmäßige Ausbringung auf die Kultur bzw. Anbaufläche ermöglicht wird. Auch im Spritztank gebildete Mischungen (Tank-Mischungen) wie wässrige Lösungen, Suspensionen, Emulsionen oder Suspoemulsionen sind stabil.

Die erfindungsgemäßen agrochemischen Mittel weisen eine ausgezeichnete biologische Wirkung auf und sind bevorzugt synergistisch. Diese Effekte erlauben unter anderem eine Reduzierung der Aufwandmenge, die Bekämpfung eines breiteren Spektrums von Schadorganismen, die Schließung von Wirkungslücken, eine schnellere und sicherere Wirkung, eine längere Dauerwirkung, eine komplette Kontrolle der Schadorganismen mit nur einer oder wenigen Applikationen, und eine Ausweitung des Anwendungszeitraumes.

Die nachfolgenden Ausführungsbeispiele erläutern die Erfindung und haben keinerlei limitierenden Charakter.

### Beispiele

### 1. Herstellung und Lagerung der Formulierungen:

Es wurden die Lösungsmittel vorgelegt und unter Rühren zunächst die agrochemischen Wirkstoffe und dann die Tenside und üblichen Hilfs- und Zusatzstoffe zugegeben. Die so erhaltenen Mikroemulsionskonzentrate wurden über einen Zeitraum von 3 Monaten u.a. bei -10, 0, 25, 40 und 50 Grad Celsius gelagert und waren während der gesamten Zeitdauer chemisch und physikalisch stabil.

### 2. Zusammensetzungen:

Die Mengen der zusammengegebenen Komponenten der einzelnen Formulierungen sind in der nachfolgenden Tabelle I in Gew.-% angegeben.

**Tabelle I - Formulierungsbeispiele Nr. 1 - 10**

| Komponente / Beispiele | | 1 | 2 | 3 | 4 | 5 | 6*** | 7*** | 8 | 9 | 10 |
|---|---|---|---|---|---|---|---|---|---|---|---|
| (a) | Metamitron | | | | | | | | | 2,50 | 2,50 |
| (a) | Diclofop-methyl | | | | | | | | 24,00 | | |
| (a) | Fenoxaprop-p-ethyl | 9,30 | 9,30 | 9,30 | 9,30 | 9,30 | 6,63 | 6,63 | 2,00 | | |
| (a) | Mefenpyr-diethyl | 4,60 | 4,60 | 4,60 | 4,60 | 4,60 | | | 3,80 | | |
| (b) | Benzylalkohol | 10,00 | | | | | 5,00 | 10,00 | | 5,00 | 5,00 |
| (b) | n-Decanol | | 10,00 | | | | | | | | |
| (b) | n-Hexanol | | | 10,00 | | | | | | | |
| (b) | n-Octanol | | | | 10,00 | | | | | | |
| (b) | n-(1-)Heptanol | | | | | 10,00 | | | 10,00 | | |
| (c) | Edenor® MESU | 15,00 | 15,00 | 15,00 | 15,00 | 15,00 | | | 18,50 | | |
| (c) | n-Methylpyrrolidon | | | | | | 15,00 | 10,00 | | | |
| (c) | Solvesso® 200 | | | | | | 23,35 | 32,49 | | | |
| (c) | Solvesso® 200 ND | 16,60 | 16,60 | 16,60 | 16,60 | 16,60 | | | | 38,70 | 38,70 |
| (c) | Triethylphosphat | | | | | | | | | 5,00 | 5,00 |
| (d) | Phenylsulfonat® Ca 100 | | | | | | 10,00 | | | | |
| (d) | Phenylsulfonat® Ca 70 | | | | | | | 8,00 | | 4,00 | 4,00 |
| (d) | Triton® GR7 ME | 7,00 | 7,00 | 7,00 | 7,00 | 7,00 | | | 7,00 | | |
| (e) | Emulsogen 3510 | | | | | | 4,00 | 3,50 | | | |
| (e) | Emulsogen® V 1816 | 12,00 | 12,00 | 12,00 | 12,00 | 12,00 | | | 12,00 | 12,00 | 12,00 |
| (e) | Genapol® X-060 | | | | | | 12,02 | | | | |
| (e) | Genapol® X-080 | 19,50 | 19,50 | 19,50 | 19,50 | 19,50 | | 15,38 | 19,20 | 23,80 | 23,80 |
| (e) | Genapol® PF 10 | | | | | | 2,00 | | | | |
| (e) | Genapol® PF 20 | | | | | | | | 2,00 | | 6,00 |
| (e) | Genapol® PF 40 | 4,00 | 4,00 | 4,00 | 4,00 | 4,00 | | 2,00 | | 6,00 | |
| (e) | Berol® 992 | | | | | | | 10,00 | | | |
| (e) | Crillet® 45 | | | | | | 14,00 | | | | |
| (e) | Edenol® D-81 | 2,00 | 2,00 | 2,00 | 2,00 | 2,00 | 2,00 | 2,00 | 1,00 | 3,00 | 3,00 |
| (e) | Etocas® 29 | | | | | | 6,00 | | | | |
| (e) | Genamin® S080 | | | | | | | | 0,50 | | |
| Gesamtmenge: | | 100 | 100 | 100 | 100 | 100 | 100 | 100 | 100 | 100 | 100 |

| | | | | | | | | | | | |
|---|---|---|---|---|---|---|---|---|---|---|---|
| Alle Angaben in Gew.-%; ***) Beispiele für Vergleichsversuche | | | | | | | | | | | |

**Tabelle I - Formulierungsbeispiele Nr. 11 - 20**

| Komponente / Beispiele | | 11 | 12 | 13 | 14 | 15 | 16 | 17 | 18 | 19 | 20 |
|---|---|---|---|---|---|---|---|---|---|---|---|
| (a) | Phenmedipham | 7,30 | 7,30 | 7,30 | | | | | 7,30 | | 7,30 |
| (a) | Desmedipham | | | | 2,41 | | 2,50 | 2,50 | 2,41 | 2,41 | |
| (a) | Ethofumesate | | | | | 14,75 | | | | 14,75 | 14,75 |
| (b) | Benzylalkohol | 5,00 | 5,00 | 5,00 | 5,00 | 5,00 | 5,00 | 5,00 | 5,00 | 5,00 | 5,00 |
| (c) | Solvesso® 200 ND | 41,18 | 37,18 | 37,18 | 46,07 | 33,73 | 38,70 | 38,70 | 38,77 | 31,32 | 26,43 |
| (d) | Phenylsulfonat® 70 Ca | 4,00 | 10,00 | 10,00 | 4,00 | 4,00 | 4,00 | 4,00 | 4,00 | 4,00 | 4,00 |
| (e) | Emulsogen® V 1816 | 10,00 | 10,00 | 10,00 | 10,00 | 10,00 | 12,00 | 12,00 | 10,00 | 10,00 | 10,00 |
| (e) | Genapol® X-080 | 18,52 | 18,52 | 18,52 | 18,52 | 18,52 | 23,80 | 23,80 | 18,52 | 18,52 | 18,52 |
| (e) | Genapol® PF 20 | | | 6,00 | | | | 6,00 | | | |
| (e) | Genapol® PF 40 | 6,00 | 6,00 | | 6,00 | 6,00 | 6,00 | | 6,00 | 6,00 | 6,00 |
| (e) | Edenol® D-81 | 3,00 | 1,00 | 1,00 | 3,00 | 3,00 | 3,00 | 3,00 | 3,00 | 3,00 | 3,00 |
| (c) | Triethylphosphat | 5,00 | 5,00 | 5,00 | 5,00 | 5,00 | 5,00 | 5,00 | 5,00 | 5,00 | 5,00 |
| Gesamtmenge: | | 100 | 100 | 100 | 100 | 100 | 100 | 100 | 100 | 100 | 100 |

| | | | | | | | | | | | |
|---|---|---|---|---|---|---|---|---|---|---|---|
| Alle Angaben in Gew.-% | | | | | | | | | | | |

**Tabelle I-Formulierungsbeispiel Nr. 21**

| Komponente / Beispiele | | 21 |
|---|---|---|
| (a) | Lactofen | 10,00 |
| (b) | Benzylalkohol | 15,00 |
| (c) | Solvesso® 200 | 20,00 |
| (c) | Xylol | 10,00 |
| (d) | Phenylsulfonat® Ca 70 | 7,00 |
| (e) | Emulsogen® V 1816 | 10,00 |
| (e) | Genapol® PF 40 | 6,00 |
| (e) | Arkopal® N100 | 20,00 |
| (e) | Edenol® D-81 | 2,00 |
| Gesamtmenge: | | 100 |

| | | |
|---|---|---|
| Alle Angaben in Gew.-% | | |

Die verwendeten Handelsprodukte sind nachfolgend erläutert:

| | |
|---|---|
| Phenmedipham (Bayer CropScience): | Herbizid |
| Desmedipham (Bayer CropScience): | Herbizid |
| Ethofumesat (Bayer CropScience): | Herbizid |
| Metamitron (Bayer CropScience): | Herbizid |
| Lactofen (Bayer CropScience): | Herbizid |
| Fenoxaprop-p-ethyl (Bayer CropScience): | Herbizid |
| Mefenpyr-diethyl (Bayer CropScience): | Safener |
| Benzylalkohol (Merck): | Aromatischer Alkohol mit mindestens 5 C-Atomen |
| Berol® 992 (Akzo Nobel): | Alkohol-ethoxylat-propoxylat |
| Edenol® D 81 (synonym Agnique® ESO 81 G; Cognis): | Epoxidiertes Sojabohnenöl |
| Edenor® MESU (Cognis): | Rapsölmethylester |
| Emulsogen® 3510 (Clariant): | EO-PO-Blockcopolymer |
| Emulsogen® V 1816 (Clariant): | EO-PO-Blockcopolymer |
| Genapol® X-060 (Clariant): | Isotridecylalkohol mit 6 Ethylenoxideinheiten |
| Genapol® X-080 (Clariant): | Isotridecylalkohol mit 8 Ethylenoxideinheiten |
| Genapol® PF 10 (Clariant): | EO-PO-EO-Blockcopolymer |
| Genapol® PF 20 (Clariant): | EO-PO-EO-Blockcopolymer |
| Genapol® PF 40 (Clariant): | EO-PO-EO-Blockcopolymer |
| Phenylsulfonat® Ca 70 (Clariant): | Calciumdodecylbenzolsulfonat |
| Phenylsulfonat® Ca 100 (synonym Calsogen® AR 100 ND, Clariant): | Calciumdodecylbenzolsulfonat |
| Solvesso® 200 (Exxon): | Aromatengemisch |
| Solvesso® 200 ND (Exxon) : | Aromatengemisch (Naphthalingehalt < 1 Gew.-%) |
| Triton® GR 7 ME (Union Carbide): | Di-(2-Ethylhexyl)Sulfosuccinat-Natrium |
| Arkopal® N100 (Clariant): | Nonylphenyolpolyglykolether |
| Crillet® 45 (Croda): | POE-20 Sorbitantrioleat |
| Etocas® 29 (Croda): | Ethoxy(29) Castor oil |
| Triethylphosphat (Merck): | Triethylphosphat |
| Xylol (Exxon): | aromatischer Kohlenwasserstoff |
| n-Methylpyrrolidon (BASF): | N-Methyl-2-pyrrolidon |
| n-Decanol (Merck): | C₁₀-Alkohol |
| n-Octanol (Merck): | C₈-Alkohol. |
| n-Heptanol (Merck): | C₇-Alkohol |
| n-Hexanol (Merck): | C₆-Alkohol |

### 3. Biologische Vergleichsversuche:

Die in der Tabelle I aufgelisteten erfindungsgemäßen Mikroemulsionskonzentrate weisen die gewünschten Eigenschaften auf. In Tabelle II ist die Wirkung der erfindungsgemäßen Mikroemulsionskonzentrate auf Unkräuter im Vergleich zu einer Standardformulierung bei gleicher Anwendungskonzentration dargestellt.

### 3.1 Versuchsdurchführung -

Durchführung als Feldversuch in Nordamerika. Unkräuter und Kulturpflanzen wurden in Parzellen nebeneinander ausgesät und nach Auflauf gleichmäßig im Querstreifenverfahren mit den Versuchsgliedern behandelt. Bonitur erfolgte 4 Wochen nach Behandlung mit den Boniturwerten: 0 (keine Unkrautkontrolle) - 100 (vollständige Unkrautkontrolle).

### 3.2 Versuchsergebnisse -

**Tabelle II - Wirkung unterschiedlicher Formulierungstypen**

| Einsatz des Herbizids Fenoxaprop-P-ethyl als: | Dosierung | Echinochloacrus-galli / ECHCG | Leptochloa panicea / LEFFI |
|---|---|---|---|
| | [g Aktiv-substanz / ha] | [% Unkraut-kontrolle] | [% Unkraut-kontrolle] |
| Standardformulierung *) (Stand der Technik) | 45 | 70 | 83 |
| Mikroemulsionskonzentrat (Erfindungsgemäß, Beispiel 6 aus Tabelle I) | 45 | 90 | 96 |
| Mikroemulsionskonzentrat (Erfindungsgemäß, Beispiel 7 aus Tabelle I) | 45 | 91 | 96 |

| | | | |
|---|---|---|---|
| *) Zusammensetzung von "Furore Super EW 69" (Hersteller Bayer CropScience, im Handel erhältlich). | | | |

### 3.3 Diskussion der Ergebnisse -

Wie aus Tabelle II hervorgeht, bewirken die erfindungsgemäßen Mikroemulsionskonzentrate eine deutlich verbesserte biologische Wirkung bei gleicher Anwendungsdosierung als die Standardformulierung des Standes der Technik.

## Patentansprüche

1. Mikroemulsionskonzentrat, enthaltend
a) ein oder mehrere agrochemische Wirkstoffe, insbesondere aus der Gruppe der Fungizide, Insektizide, Pflanzenwachstumsregulatoren, Herbizide und Safener,
b) ein oder mehrere alkoholische Lösungsmittel mit mindestens 5 C-Atomen,
c) ein oder mehrere nicht-alkoholische Lösungsmittel,
d) ein oder mehrere anionische Tenside, und
e) ein oder mehrere nichtionische Tenside.

2. Mikroemulsionskonzentrat gemäß Anspruch 1, worin als Komponente (a) enthalten sind, ein oder mehrere herbizide Wirkstoffe, allein oder zusammen mit Safenern.

3. Mikroemulsionskonzentrat gemäß Anspruch 1 oder 2, worin als Komponente (b) enthalten sind, ein oder mehrere Lösungsmittel aus der Gruppe Benzylalkohol, n-, i-, s- Hexanol, n-, i-, s- Heptanol und n-, i-, s- Octanol.

4. Mikroemulsionskonzentrat gemäß einem oder mehreren der Ansprüche 1 bis 3, worin als Komponente (d) enthalten sind, ein oder mehrere anionische Tenside aus der Gruppe Sulfate, Sulfonate, Phosphate und Phosphonate von Kohlenwasserstoffen, die optional alkoxyliert sein können, vorzugsweise Dialkyl-Sulfosuccinate, Alkylarylsulfonate, Alkylethersulfate, Alkylsulfate, Alkylsulfonate, Alkylpolyglykoletherphosphate, Alkylarylpolyglykoletherphosphate und - phosphonate.

5. Mikroemulsionskonzentrat gemäß einem oder mehreren der Ansprüche 1 bis 4, worin als Komponente (e) enthalten sind, ein oder mehrere nichtionische Tenside aus der Gruppe Alkoxylate, vorzugsweise Alkylarylpolyalkoxylate, Alkylenoxid-Blockcopolymere, Polyalkylenoxide, die mit C₁₀-C₂₂-Kohlenwasserstoffresten substituiert sein können, alkoxylierte Öle, alkoxylierte C₁₀-C₂₂-Fettamine.

6. Mikroemulsionskonzentrat gemäß einem oder mehreren der Ansprüche 1 bis 5, zusätzlich enthaltend übliche Hilfs- und Zusatzstoffe (Komponente f).

7. Verfahren zur Herstellung eines Mikroemulsionskonzentrats gemäß einem oder mehreren der Ansprüche 1 bis 6, worin die Komponenten gemischt werden.

8. Verwendung eines Mikroemulsionskonzentrats gemäß einem oder mehreren der Ansprüche 1 bis 6, zur Herstellung einer Mikroemulsion.

9. Agrochemisches Mittel in Form einer Mikroemulsion oder der daraus erhältlichen Spritzbrühe, enthaltend
a) ein oder mehrere agrochemische Wirkstoffe, insbesondere aus der Gruppe der Fungizide, Insektizide, Pflanzenwachstumsregulatoren, Herbizide und Safener,
b) ein oder mehrere alkoholische Lösungsmittel mit mindestens 5 C-Atomen,
c) ein oder mehrere nicht-alkoholische Lösungsmittel,
d) ein oder mehrere anionische Tenside,
e) ein oder mehrere nichtionische Tenside, und
Wasser.

10. Agrochemisches Mittel gemäß Anspruch 9, zusätzlich enthaltend übliche Hilfs- und Zusatzstoffe (Komponente f).

11. Agrochemisches Mittel gemäß Anspruch 9 oder 10, enthaltend als Komponente (b) ein oder mehrere Lösungsmittel aus der Gruppe Benzylalkohol, n-, i-, s- Hexanol, n-, i-, s- Heptanol und n-, i-, s- Octanol.

12. Agrochemisches Mittel, erhältlich durch Verdünnen eines Mikroemulsionskonzentrats gemäß einem oder mehreren der Ansprüche 1 bis 6, mit Wasser.

13. Verfahren zur Herstellung eines agrochemischen Mittels gemäß einem oder mehreren der Ansprüche 9 bis12, worin die Komponenten gemischt werden.

14. Verfahren zur Bekämpfung von Schadorganismen, worin eine wirksame Menge eines agrochemischen Mittels gemäß einem oder mehreren der Ansprüche 1 bis 6 oder 9 bis 12 auf die Schadorganismen oder die Orte an denen sie auftreten appliziert wird.

15. Verfahren zur Bekämpfung von unerwünschtem Pflanzenwuchs, worin eine wirksame Menge eines herbiziden Mittels gemäß einem oder mehreren der Ansprüche 1 bis 6 oder 9 bis 12 auf die Schadpflanzen, Teile der Pflanzen, Pflanzensamen, Ort oder Fläche auf der Pflanzen wachsen appliziert wird.

16. Verwendung eines agrochemischen Mittels gemäß einem oder mehreren der Ansprüche 1 bis 6 oder 9 bis 12, zur Bekämpfung von Schadorganismen.

17. Verwendung gemäß Anspruch 16, worin die Schadorganismen Schadpflanzen sind.
